(19) Europäisches Patentamt
European Patent Office
Office européen des brevets

(11) **EP 4 603 352 A2**

(12) **EUROPEAN PATENT APPLICATION**

(43) Date of publication:
**20.08.2025 Bulletin 2025/34**

(21) Application number: **25186013.6**

(22) Date of filing: **27.06.2025**

(51) International Patent Classification (IPC):
**B60W 30/095** (2012.01)    **B60W 60/00** (2020.01)

(52) Cooperative Patent Classification (CPC):
**B60W 30/095; B60W 60/0011;** B60W 2520/10;
B60W 2552/15; B60W 2554/4041; B60W 2556/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024  CN 202410867611**

(71) Applicant: **Shanghai Horizon Intelligent
Automotive
Technology Co., Ltd.
Shanghai Jiading District 201800 (CN)**

(72) Inventor: **CUI, Yajun
Shanghai, 201800 (CN)**

(74) Representative: **Patentanwälte Magenbauer &
Kollegen
Partnerschaft mbB
Plochinger Straße 109
73730 Esslingen (DE)**

(54) **METHOD AND APPARATUS FOR DETERMINING TIME TO COLLISION, DEVICE, AND STORAGE MEDIUM**

(57) Disclosed are a time to collision determining method and apparatus for a vehicle. The method includes: determining vehicle data of an ego vehicle and detection data of a target object; determining a first predicted driving trajectory of the ego vehicle and a second predicted driving trajectory of the target object based on the ego vehicle data and the detection data, respectively; determining a collision condition based on first driving data of the ego vehicle data, second driving data of the detection data, and the second predicted driving trajectory; determining a plurality of trajectory intersections based on the first predicted driving trajectory and the second predicted driving trajectory; and determining a time to collision based on the ego vehicle data, the detection data, the collision condition, and the plurality of trajectory intersections.

Fig.3

**EP 4 603 352 A2**

## Description

### FIELD OF THE INVENTION

This disclosure relates to the technical field of intelligent driving of vehicles, and in particular, to a method and apparatus for determining a time to collision, a device, and a storage medium.

### BACKGROUND OF THE INVENTION

With constant development of automotive intelligence, assisted driving technologies and autonomous driving technologies are becoming increasingly mature.

Safety is crucial for assisted driving and autonomous driving. Collision warning can effectively prevent or mitigate accidents and improve driving safety. Moreover, rationality of collision warning largely depends on accuracy of prediction of a time to collision. The time to collision is a most important parameter in collision warning decision-making, and a calculation manner thereof is also particularly important.

### SUMMARY OF THE INVENTION

Generally, a conventional time to collision calculation manner is determined through single-step prediction and deduction. This manner is prone to inaccurate calculation when a single-step time interval is large, and has impact on resource utilization when the time interval is small. Moreover, this manner is greatly affected by perception errors and has poor robustness. To resolve the foregoing technical problems, this disclose provides a method and apparatus for determining a time to collision, a device, and a storage medium, which can resolve the problems of inaccurate calculation and high resource utilization in the conventional time to collision calculation manner.

According to an embodiment in a first aspect of this disclosure, a method for determining a time to collision is provided, including: determining ego vehicle data of an ego vehicle and detection data of a target object; determining, based on the ego vehicle data and the detection data, a first predicted driving trajectory of the ego vehicle and a second predicted driving trajectory of the target object, respectively; determining a collision condition between the ego vehicle and the target object based on first driving data of the ego vehicle data, second driving data of the detection data, and the second predicted driving trajectory; determining a plurality of trajectory intersections based on the first predicted driving trajectory and the second predicted driving trajectory; and determining the time to collision between the ego vehicle and the target object based on the ego vehicle data, the detection data, the collision condition, and the plurality of trajectory intersections.

According to an embodiment in a second aspect of this disclosure, an apparatus for determining time to collision is provided, including: a data determining module, configured to determine vehicle data of an ego vehicle and detection data of a target object; a trajectory determining module, configured to determine a first predicted driving trajectory of the ego vehicle and a second predicted driving trajectory of the target object based on the ego vehicle data and the detection data, respectively; a condition determining module, configured to determine a collision condition between the ego vehicle and the target object based on first driving data of the ego vehicle data, second driving data of the detection data, and the second predicted driving trajectory; an intersection determining module, configured to determine a plurality of trajectory intersections based on the first predicted driving trajectory and the second predicted driving trajectory; and a time to collision determining module, configured to determine a time to collision between the ego vehicle and the target object based on the ego vehicle data, the detection data, the collision condition, and the plurality of trajectory intersections.

According to an embodiment in a third aspect of this disclosure, a computer readable storage medium is provided. The storage medium stores a computer program, which is used for implementing the method for determining a time to collision provided in the embodiment in the first aspect.

According to an embodiment in a fourth aspect of this disclosure, an electronic device is provided. The electronic device includes: a processor; and a memory configured to store processor-executable instructions, wherein the processor is configured to read the executable instructions from the memory, and execute the instructions to implement the method for determining a time to collision provided in the embodiment in the first aspect.

According to an embodiment in a fifth aspect of this disclosure, a computer program product is provided. When instructions in the computer program product are executed by a processor, the method for determining a time to collision provided in the embodiment in the first aspect is implemented.

According to the method for determining a time to collision provided in this disclosure, the collision condition and the plurality of trajectory intersections between the ego vehicle and the target object are determined through the ego vehicle data of the ego vehicle and the detection data of the target object, and then the time to collision between the ego vehicle and the target object is determined based on the collision condition and the plurality of trajectory intersections. In this way, the time to collision can be accurately determined by combining different conditions with trajectory crossing, thereby improving prediction accuracy for the time to collision.

**BRIEF DESCRIPTION OF THE DRAWINGS**

FIG. 1 is a schematic diagram of a scenario to which a method for determining a time to collision according to an exemplary embodiment of this disclosure is applicable;

FIG. 2 is a schematic flowchart of a method for determining a time to collision according to an exemplary embodiment of this disclosure;

FIG. 3 is a schematic diagram of a scenario to which a method for determining a time to collision according to another exemplary embodiment of this disclosure is applicable;

FIGS. 4A-4F are schematic diagrams of collision conditions between an ego vehicle and a target object according to an exemplary embodiment of this disclosure;

FIG. 5 is a schematic flowchart of a method for determining a time to collision according to another exemplary embodiment of this disclosure;

FIG. 6 is a schematic flowchart of a method for determining a time to collision according to still another exemplary embodiment of this disclosure;

FIG. 7 is a schematic flowchart of a method for determining a time to collision according to yet another exemplary embodiment of this disclosure;

FIGS. 8A-8D are schematic diagrams of scenarios to which a method for determining a time to collision according to still another exemplary embodiment of this disclosure is applicable;

FIGS. 9A to 9C are schematic diagrams of collision conditions between an ego vehicle and a target object according to another exemplary embodiment of this disclosure;

FIGS. 10A to 10D are schematic diagrams of collision conditions between an ego vehicle and a target object according to still another exemplary embodiment of this disclosure;

FIGS. 11A to 11C is schematic diagrams of collision conditions between an ego vehicle and a target object according to yet another exemplary embodiment of this disclosure;

FIGS. 12A to 12D is schematic diagrams of collision conditions between an ego vehicle and a target object according to still yet another exemplary embodiment of this disclosure;

FIG. 13 is a schematic diagram of a time to collision calculation principle for a vehicle according to an exemplary embodiment of this disclosure;

FIG. 14 is a schematic diagram of a time to collision calculation principle for a vehicle according to another exemplary embodiment of this disclosure;

FIG. 15 is a schematic diagram of a time to collision calculation principle for a vehicle according to still another exemplary embodiment of this disclosure;

FIG. 16 is a schematic diagram of a time to collision calculation principle for a vehicle according to yet another exemplary embodiment of this disclosure;

FIG. 17 is a schematic flowchart of a method for determining a time to collision according to still yet another exemplary embodiment of this disclosure;

FIG. 18 is a schematic flowchart of a method for determining a time to collision according to a further exemplary embodiment of this disclosure;

FIG. 19 is a schematic diagram of a predicted driving trajectory of an ego vehicle according to an exemplary embodiment of this disclosure;

FIG. 20 is a schematic flowchart of a method for determining a time to collision according to a still further exemplary embodiment of this disclosure;

FIG. 21 is a schematic diagram of a structure of an apparatus for determining time to collision according to an exemplary embodiment of this disclosure;

FIG. 22 is a schematic diagram of a structure of an apparatus for determining time to collision according to another exemplary embodiment of this disclosure;

FIG. 23 is a schematic diagram of a structure of an apparatus for determining time to collision according to still another exemplary embodiment of this disclosure; and

FIG. 24 is a schematic diagram of a structure of an electronic device according to an exemplary embodiment of this disclosure.

**DETAILED DESCRIPTION OF THE EMBODIMENTS**

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

Application overview

During operation of an assisted driving system, it is needed to calculate collision risks between an ego vehicle and a target object in a real-time manner. In this field, a time to collision (TTC) between the ego vehicle and the target object is commonly used to measure the collision risks between the ego vehicle and the target object.

Currently, there are two main relevant technical solutions for determining the time to collision of the vehicle. One is to use a real-time relative distance and a relative velocity from a single dimension (longitudinal or transverse) to determine the TTC. This method may cause distortion in TTC calculation, resulting in poor robustness and consistency in subsequent risk assessment, which may have significant impact on performance of an intelligent driving system. The other one is to use state information of the ego vehicle and the target object at a current moment to predict and deduce positions of the ego vehicle and the target object in a future time in a single step, so as to determine the TTC. This method is prone to missed detections when a single-step time interval is set too large, and has high resource utilization when the single-step time interval is set too small.

Therefore, to resolve the foregoing problems, embodiments of this disclosure provide a method for determining a time to collision. According to this method, a collision condition and a plurality of trajectory intersections between the ego vehicle and the target object are determined through vehicle data of the ego vehicle and detection data of the target object, and then a time to collision between the ego vehicle and the target object is determined based on the collision condition and the plurality of trajectory intersections. In this way, the time to collision can be accurately determined by combining different conditions with trajectory crossing, thereby improving prediction accuracy for the time to collision.

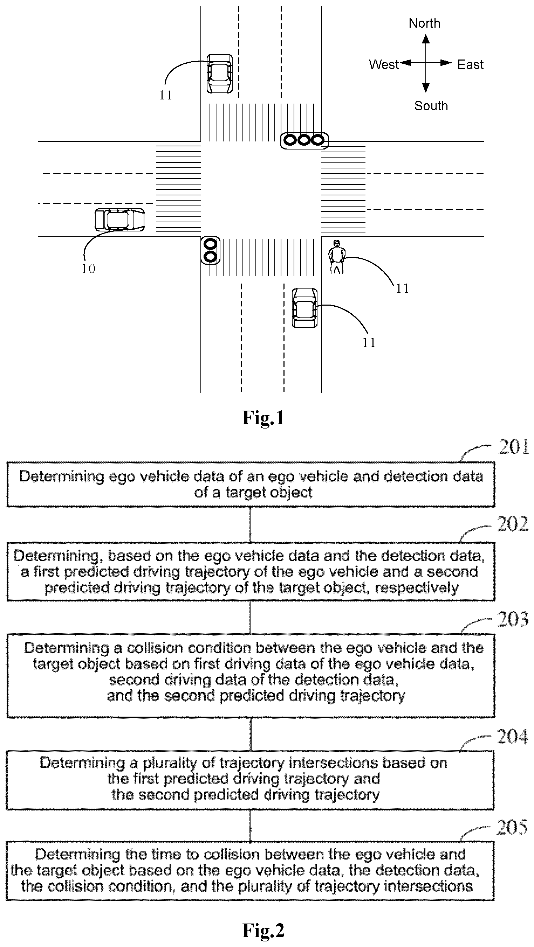

FIG. 1 is a schematic diagram of a scenario to which a method for determining a time to collision according to an embodiment of this disclosure is applicable. As shown in FIG. 1, an ego vehicle 10 may collect corresponding vehicle data by using vehicle sensors of the ego vehicle or other vehicle data acquisition units during driving. Meanwhile, when a target object 11 is detected, the ego vehicle 10 may collect data of the target object 11 to serve as detection data of the target object 11. Certainly, the detection data of the target object 11 may also be collected by the target object 11 or by a third party, and may be sent to the ego vehicle 10 after being collected.

The target object 11 includes but is not limited to pedestrians, non-motorized vehicles, and motorized vehicles. In practical use, the vehicle sensors of the ego vehicle 10 include but are not limited to: image sensors corresponding to cameras with different viewing angles, a radar sensor, a laser radar sensor, an ultrasonic sensor, a torque sensor, and a wheel speed sensor. The other vehicle data acquisition units include but are not limited to a global positioning system (GPS) and a Beidou navigation satellite system (BDS).

As shown in FIG. 1, the ego vehicle 10 determines vehicle data of the ego vehicle and the detection data of the target object 11. The ego vehicle 10 determines a first predicted driving trajectory of the ego vehicle 10 and a second predicted driving trajectory of the target object 11 based on the ego vehicle data and the detection data, respectively. The ego vehicle 10 determines a collision condition between the ego vehicle 10 and the target object 11 based on first driving data of the ego vehicle data, second driving data of the detection data, and the second predicted driving trajectory. The ego vehicle 10 determines a plurality of trajectory intersections based on the first predicted driving trajectory and the second predicted driving trajectory. The ego vehicle 10 determines a time to collision between the ego vehicle 10 and the target object 11 based on the ego vehicle data, the detection data, the collision condition, and the plurality of trajectory intersections. Further, the ego vehicle 10 may issue a collision risk warning to remind a driver to pay attention to driving safety when the determined time to collision is less than a first preset value. Certainly, the ego vehicle 10 may also perform automatic emergency braking to prevent accidents when the determined time to collision is less than a second preset value.

Exemplary method

FIG. 2 is a schematic flowchart of a method for determining a time to collision according to an exemplary embodiment of this disclosure. The method in this embodiment may be applied to an electronic device. As shown in FIG. 2, the method includes steps S201 to S205.

S201. Determining ego vehicle data of an ego vehicle and detection data of a target object .

For example, the ego vehicle data of the ego vehicle and the detection data of the target object may be determined during a driving process of the ego vehicle.

The ego vehicle data of the ego vehicle includes but is not limited to: driving data, size data, and position data of the ego vehicle, such as a velocity of the ego vehicle, lateral and longitudinal acceleration of the ego vehicle, a turning radius of the ego vehicle, a current curvature of the ego vehicle, a yaw angle of the ego vehicle, a yaw rate of the ego vehicle, a size of the ego vehicle, an axis length of the ego vehicle, a distance from a rear axle of the ego vehicle to a center of a front bumper of the ego vehicle, and a distance from the rear axle of the ego vehicle to a center of a rear bumper of the ego vehicle.

The detection data of the target object includes but is not limited to: driving data, size data, and position data of the target object, such as a size of the target object, a type of the target object, horizontal and vertical positions of the target object, horizontal and vertical velocities of the target object, horizontal and vertical acceleration of the target object, and orientation of a front end of the target object.

In some examples, sensor data collected by the sensor of the ego vehicle may be obtained first, and then the ego vehicle data of the ego vehicle and the detection data of the target object may be determined based on the sensor data. For example, the size of the target object may be determined through image data collected by the image sensor of the ego vehicle. For another example, a steering wheel angle and a steering wheel speed of the ego vehicle may be determined by data collected by a torque angle sensor of the ego vehicle, so as to determine the turning radius of the ego vehicle. For still another example, the position of the target object may be determined through laser radar data collected by a Lidar sensor of the ego vehicle. For yet another example, the velocity of the ego vehicle may be determined through data collected by the wheel speed sensor of the ego vehicle.

Step S202. Determining, based on the ego vehicle data and the detection data, a first predicted driving trajectory of the ego vehicle and a second predicted driving trajectory of the target object, respectively.

For example, a driving lane equation for the ego vehicle may be determined based on the ego vehicle data, and a driving lane equation for the target object may be determined based on the detection data. Thus, the driving lane equation for the ego vehicle is the first predicted driving trajectory of the ego vehicle, and the driving lane equation for the target object is the second predicted driving trajectory of the target object.

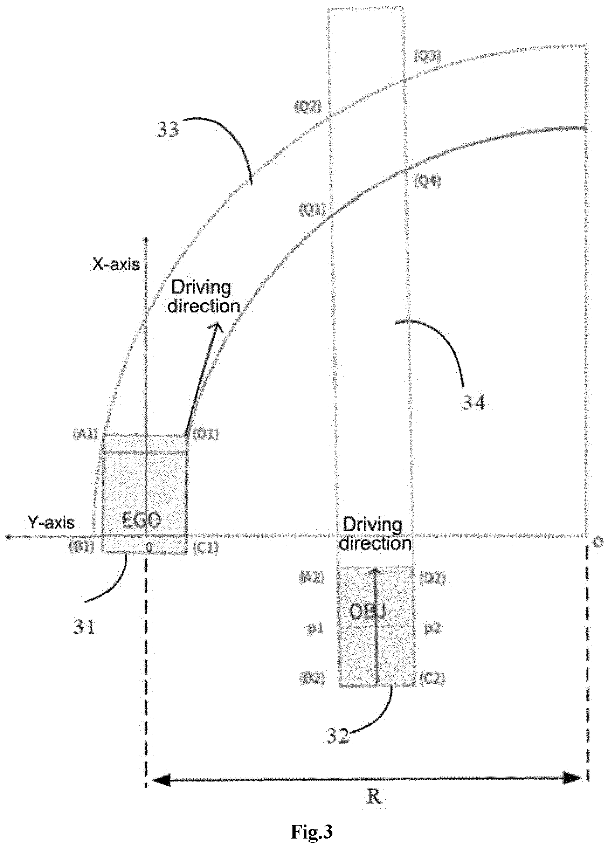

For example, when the ego vehicle is in a turning status, the turning of the ego vehicle may be approximated as a circular motion, and a driving lane of the ego vehicle is a concentric ring composed of boundaries that are served by two sides of an ego vehicle body. Moreover, this concentric ring is merely a 1/4 circle. As shown in FIG. 3, an ego vehicle 31 (EGO) is in a turning status, and a driving direction is as shown in the figure. A target object 32 (a target vehicle 32 in FIG. 3) is in a status of driving straight, and a driving direction is as shown in the figure. Four vertices of the ego vehicle 31 are A1, B1, C1, and D1; and four vertices of the target object 32 are A2, B2, C2, and D2. A coordinate system of the ego vehicle in this embodiment of this disclosure takes a center point of the rear axle of the ego vehicle as a coordinate origin 0, an X-axis of the coordinate system of the ego vehicle is parallel to a driving direction of the vehicle, and a positive direction is a direction in which the vehicle is driving. A Y-axis of the coordinate system of the ego vehicle is perpendicular to the driving direction of the vehicle, and a positive direction is a left side of the vehicle. Further, a turning radius R of the ego vehicle 31 is a distance between the coordinate origin 0 and a center O of the concentric ring. For convenience of subsequent calculations, a middle point between A2 and B2 may also be set as a point p1, and a middle point between C2 and D2 may also be set as a point p2. Trajectory intersections between a first predicted driving trajectory 33 of the ego vehicle 31 and a second predicted driving trajectory 34 of the target object 32 are Q1, Q2, Q3, and Q4.

A radius of a concentric ring corresponding to the first predicted driving trajectory 33 may be calculated based on the turning radius R and the size of the ego vehicle. The first predicted driving trajectory 33 of the ego vehicle 31 (that is, the driving lane equation for the ego vehicle) is a lane equation for a future driving position coordinate of the ego vehicle 31, that is, a function of a position coordinate of the ego vehicle of a longitudinal x and a transverse y.

It may be learned from FIG. 3 that the target object 32 may be approximated as moving along a straight line, and thus the driving lane for the target object 32 is a linear lane composed of boundaries that are served by two sides of the vehicle body of the target object 32. Lane slope k may be calculated from lateral and longitudinal velocities of the target vehicle 32. The second predicted driving trajectory 34 of the target vehicle 32 (that is, the driving lane equation for the target vehicle 32) is a lane equation for a future driving position coordinate of the target vehicle 32, that is, a function of a position coordinate of the target vehicle of a longitudinal x and a transverse y.

It should be noted that the first predicted driving trajectory 33 of the ego vehicle and the second predicted driving trajectory 34 of the target object in FIG. 3 are merely for examples. Motion trajectories of the ego vehicle and the target object are not limited in this embodiment of this disclosure.

Step S203. Determining a collision condition between the ego vehicle and the target object based on first driving data of the ego vehicle data, second driving data of the detection data, and the second predicted driving trajectory.

For example, corresponding collision conditions when there is a risk of collision between the ego vehicle and the target object may be classified based on the first driving data of the ego vehicle data, the second driving data of the detection data, and the second predicted driving trajectory, thereby facilitating determining of TTC based on different collision conditions in the future.

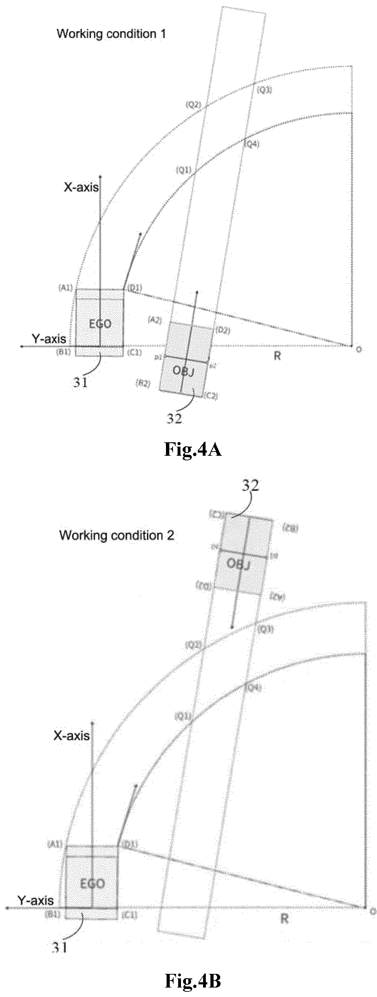

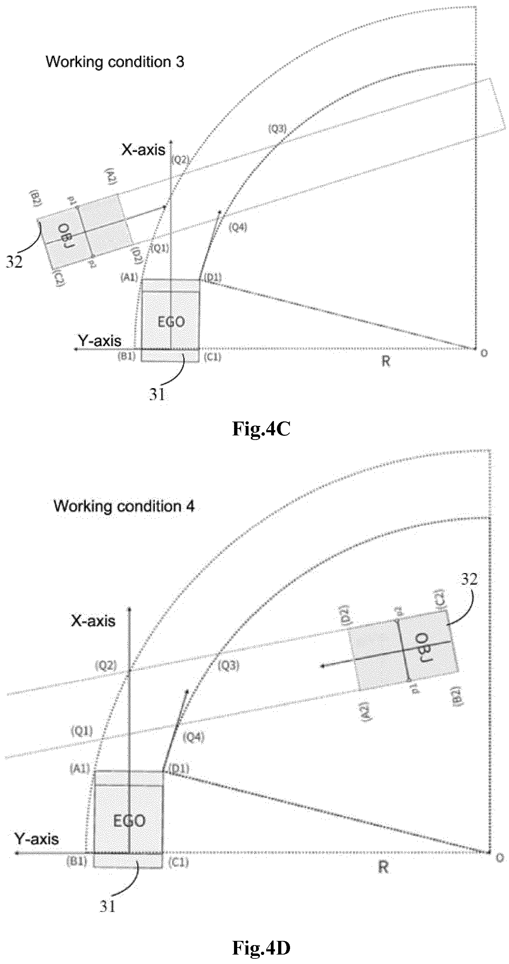

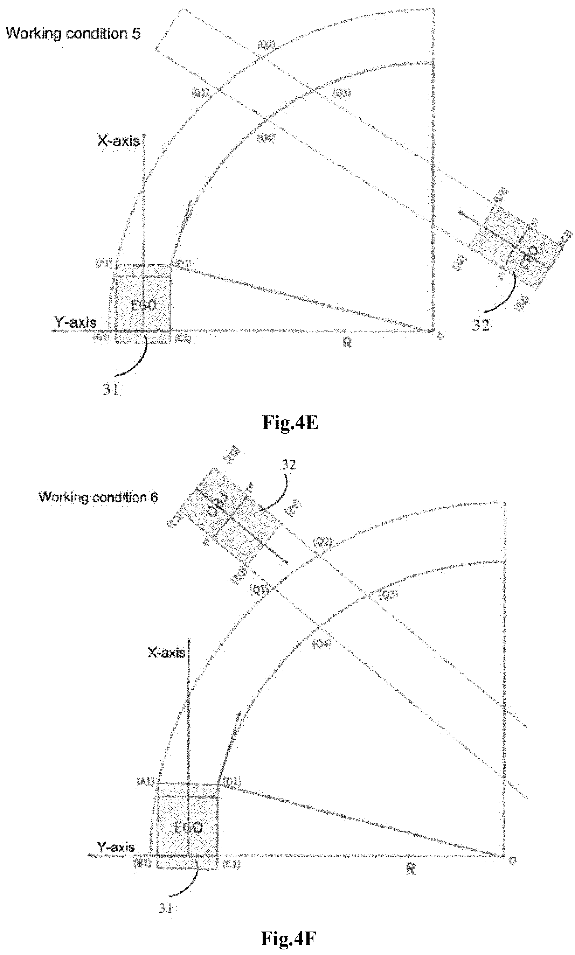

As shown in FIGS. 4A- 4F, based on the predicted driving trajectories of the ego vehicle and the target object shown in FIG. 3, the collision conditions between the ego vehicle 31 and the target vehicle 32 may be classified into working conditions 1 to 6. The working condition 1 is shown in FIG. 4A, the working condition 2 is shown in FIG. 4B, the working condition 3 is shown in FIG. 4C, the working condition 4 is shown in FIG. 4D, the working condition 5 is shown in FIG. 4E, and the working condition 6 is shown in FIG. 4F. The working condition 1 is: The ego vehicle drives in a same direction as the target object, and an intercept is between a center O of a circle and the ego vehicle. To be specific, an entry point of the ego vehicle is an intersection point (intersection point Q1 in FIG. 4A) between an inner side of the driving lane of the ego vehicle (a side facing the driving lane of the target vehicle) and an inner side of the driving lane of the target vehicle (a side facing the driving lane of the ego vehicle); a driving-away point of the ego vehicle is an intersection point (intersection point Q3 in FIG. 4A) between an outer side of the driving lane of the ego vehicle (the other side of the driving lane of the ego vehicle) and an outer side of the driving lane of the target vehicle (the other side of the driving lane of the target vehicle); an entry point of the target vehicle is an intersection point (intersection point Q1 in FIG. 4A) between the inner side of the driving lane of the ego vehicle and the inner side of the driving lane of the target vehicle; and the driving-away point of the target vehicle is an intersection point (intersection point Q3 in FIG. 4A) between the outer side of the driving lane of the ego vehicle and the outer side of the driving lane of the target vehicle. The working condition 2 is: The ego vehicle and the target object drive in opposite directions, and the intercept is between the center O of the circle and the ego vehicle. To be specific, the entry point of the ego vehicle is the intersection point (intersection point Q1 in FIG. 4B) between the inner side the driving lane of the ego vehicle and the inner side of the driving lane of the target vehicle; the driving-away point of the ego vehicle is the intersection point (intersection point Q3 in FIG. 4B) between the outer side of the driving lane of the ego vehicle and the outer side of the driving lane of the target vehicle; the entry point of the target vehicle is the intersection point (intersection point Q3 in FIG. 4B) between the outer side of the driving lane of the ego vehicle and the outer side of the driving lane of the target vehicle; and the driving-away point of the target vehicle is the intersection point (intersection point Q1 in FIG. 4B) between the inner side of the driving lane of the ego vehicle and the inner side of the driving lane of the target vehicle. The working condition 3 is: The ego vehicle drives in a same direction as the target object, and the intercept is located closer to the positive Y-axis direction compared to the ego vehicle. To be specific, the entry point of the ego vehicle is an intersection point (intersection point Q1 in FIG. 4C) between the outer side of the driving lane of the ego vehicle and the inner side of the driving lane of the target vehicle; the driving-away point of the ego vehicle is an intersection point (intersection point Q3 in FIG. 4C) between the inner side of the driving lane of the ego vehicle and the outer side of the driving lane of the target vehicle; the entry point of the target vehicle is an intersection point (intersection point Q1 in FIG. 4C) between the outer side of the driving lane of the ego vehicle and the inner side of the driving lane of the target vehicle; and the driving-away point of the target vehicle is an intersection point (intersection point Q3 in FIG. 4C) between the inner side of the driving lane of the ego vehicle and the outer side of the driving lane of the target vehicle. The working condition 4 is: The ego vehicle and the target object drive in opposite directions, and the intercept is located closer to the positive Y-axis direction compared to the ego vehicle. To be specific, the entry point of the ego vehicle is the intersection point (intersection point Q1 in FIG. 4D) between the outer side of the driving lane of the ego vehicle and the inner side of the driving lane of the target vehicle; the driving-away point of the ego vehicle is the intersection point (intersection point Q3 in FIG. 4D) between the inner side of the driving lane of the ego vehicle and the outer side of the driving lane of the target vehicle; the entry point of the target vehicle is the intersection point (intersection point Q3 in FIG. 4D) between the inner side of the driving lane of the ego vehicle and the outer side of the driving lane of the target vehicle; and the driving-away point of the target vehicle is the intersection point (intersection point Q1 in FIG. 4D) between the outer side of the driving lane of the ego vehicle and the inner side of the driving lane of the target vehicle. The working condition 5 is: The ego vehicle drives in a same direction as the target object, and the intercept is located closer to the negative Y-axis direction compared to the center O of the circle. To be specific, the entry point of the ego vehicle is the intersection point (intersection point Q1 in FIG. 4E) between the outer side of the driving lane of the ego vehicle and the inner side of the driving lane of the target vehicle; the driving-away point of the ego vehicle is the intersection point (intersection point Q3 in FIG. 4E) between the inner side of the driving lane of the ego vehicle and the outer side of the driving lane of the target vehicle; the entry point of the target vehicle is the intersection point (intersection point Q3 in FIG. 4E) between the inner side of the driving lane of the ego vehicle and the outer side of the driving lane of the target vehicle; and the driving-away point of the target vehicle is the intersection point (intersection point Q1 in FIG. 4E) between the outer side of the driving lane of the ego vehicle and the inner side of the driving lane of the target vehicle. The working condition 6 is: The ego vehicle and the target object drive in opposite directions, and the intercept is located closer to the negative Y-axis direction compared to the center O of the circle. The entry point of the ego vehicle is the intersection point (intersection point Q1 in FIG. 4F) between the outer side of the driving lane of the ego vehicle and the inner side of the driving lane of the target vehicle; the driving-away point of the ego vehicle is the intersection point (intersection point Q3 in FIG. 4F) between the inner side of the driving lane of the ego vehicle and the outer side of the driving lane of the target vehicle; the entry point of the target vehicle is the intersection point (intersection point Q1 in FIG. 4F) between the outer side of the driving lane of the ego vehicle and the inner side of the driving lane of the target vehicle; and the driving-away point of the target vehicle is the intersection point (intersection point Q3 in FIG. 4F) between the inner side of the driving lane of the ego vehicle and the outer side of the driving lane of the target vehicle. The intercept refers to an intercept of a trajectory of the target vehicle on the Y-axis of the coordinate system of the ego vehicle.

Step S204. Determining a plurality of trajectory intersections based on the first predicted driving trajectory and the second predicted driving trajectory.

For example, the driving lane equation for the ego vehicle is the first predicted driving trajectory of the ego vehicle, and the driving lane equation for the target object is the second predicted driving trajectory of the target object. Further, an intersection coordinate may be obtained by combining equations and invalid intersection points may be filtered out. The filtered intersection points are the plurality of trajectory intersections.

Step S205. Determining the time to collision between the ego vehicle and the target object based on the ego vehicle data, the detection data, the collision condition, and the plurality of trajectory intersections.

For example, as shown in FIG. 3, positions of A1 to D1 may be determined based on the size of the ego vehicle of the ego vehicle data; and positions of A2 to D2 may be determined based on a size and a position of the target vehicle of the detection data. Subsequently, times at which A1 to D1 pass through various trajectory intersections (Q1 to Q4) are predicted based on the driving data of the ego vehicle and the positions of A1 to D1; and times at which A2 to D2 pass through the various trajectory intersections (Q1 to Q4) are predicted based on driving data of the target vehicle and the positions of A2 to D2. Further, the time to collision between the ego vehicle and the target vehicle may be determined based on the times at which A1 to D1 pass through the various trajectory intersections, the times at which A2 to D2 pass through the various trajectory intersections, and the collision condition.

According to the method for determining a time to collision provided in this embodiment of this disclosure, the collision condition and the plurality of trajectory intersections between the ego vehicle and the target object are determined through the ego vehicle data of the ego vehicle and the detection data of the target object, and then the time to collision between the ego vehicle and the target object is determined based on the collision condition and the plurality of trajectory intersections. In this way, the time to collision can be accurately determined by combining different conditions with trajectory crossing, thereby improving prediction accuracy for the time to collision.

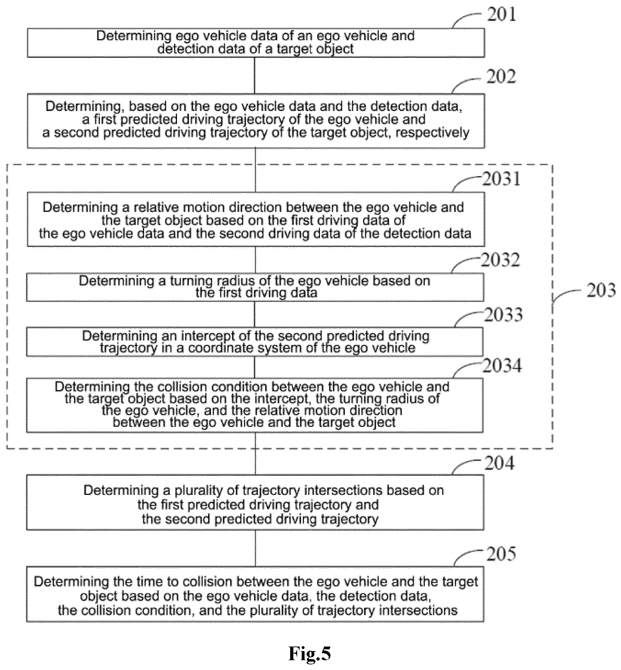

As shown in FIG. 5, on the basis of the embodiment shown in FIG. 2, step S203 may include steps S2031 to S2034.

Step S2031. Determining a relative motion direction between the ego vehicle and the target object based on the first driving data of the ego vehicle data and the second driving data of the detection data.

For example, the first driving data is a vertical absolute velocity of the ego vehicle, and the second driving data is a vertical absolute velocity of the target object. Thus, the relative motion direction between the ego vehicle and the target object may be determined based on the vertical absolute velocity of the ego vehicle and the vertical absolute velocity of the target object. The relative motion direction includes but are not limited to that the ego vehicle and the target object move in a same direction and in opposite directions. Certainly, the relative motion direction between the ego vehicle and the target object may also be determined through other driving data of the ego vehicle and the driving data of the target object, which is not limited in this embodiment of this disclosure.

Step S2032. Determining a turning radius of the ego vehicle based on the first driving data.

For example, the first driving data is the steering wheel angle and the steering wheel speed of the ego vehicle, so that the turning radius R of the ego vehicle may be determined based on the steering wheel angle and/or the steering wheel speed of the ego vehicle.

Step S2033. Determining an intercept of the second predicted driving trajectory in a coordinate system of the ego vehicle.

For example, the driving lane equation for the target object is the second predicted driving trajectory of the target object. Further, the corresponding intercept of the second predicted driving trajectory in the coordinate system of the ego vehicle may be determined based on the driving lane equation for the target object or a central axis equation corresponding to the driving lane equation for the target object. For example, in FIG. 3, an intercept C of the second predicted driving trajectory 34 or a central axis of the second predicted driving trajectory 34 on the Y-axis of the coordinate system of the ego vehicle is the corresponding intercept of the second predicted driving trajectory in the coordinate system of the ego vehicle.

S2034. Determining the collision condition between the ego vehicle and the target object based on the intercept, the turning radius of the ego vehicle, and the relative motion direction between the ego vehicle and the target object.

For example, whether the intercept C is greater than the turning radius R of the ego vehicle is determined to obtain a first determining result; whether the intercept C is less than 0 (whether the intercept C is negative) is determined to obtain a second determining result; and whether the relative motion direction between the ego vehicle and the target object is an opposite direction or a same direction is determined to obtain a third determining result. Further, the collision condition between the ego vehicle and the target object is determined based on the first determining result, the second determining result, and the third determining result. The origin of the coordinate system of the ego vehicle is 0, and whether the intercept C is greater than the turning radius of the ego vehicle refers to whether an absolute value of the intercept C is greater than the turning radius of the ego vehicle.

If the absolute value of the intercept C is greater than the turning radius, the intercept C is less than 0 (i.e., the intercept C is negative) and the relative motion direction is the opposite direction, it is determined that the collision condition is the working condition 6 in FIG. 4F; if the absolute value of the intercept C is greater than the turning radius, the intercept C is negative and the relative motion direction is a same direction, it is determined that the collision condition is the working condition 5 in FIG. 4E; if the absolute value of the intercept C is greater than the turning radius, the intercept C is greater than 0 (i.e., the intercept C is positive) and the relative motion direction is the opposite direction, it is determined that the collision condition is the working condition 4 in FIG. 4D; if the absolute value of the intercept C is greater than the turning radius, the intercept C is greater than 0 and the relative motion direction is a same direction, it is determined that the collision condition is the working condition 3 in FIG. 4C; if the absolute value of the intercept C is less than the turning radius, the intercept C is less than 0 and the relative motion direction are the opposite direction, it is determined that the collision condition is the working condition 2 in FIG. 4B; and if the absolute value of the intercept C is less than the turning radius, the intercept C is less than 0 and the relative motion direction is a same direction, it is determined that the collision condition is the working condition 1 in FIG. 4A.

According to the method for determining a time to collision provided in this embodiment of this disclosure, the collision condition between the ego vehicle and the target object is determined based on the intercept, the turning radius of the ego vehicle, and the relative motion direction between the ego vehicle and the target object. In this way, the collision condition between the ego vehicle and the target object can be reasonably and accurately determined, so as to further accurately determine the time to collision under different operating conditions, thereby improving the prediction accuracy for the time to collision.

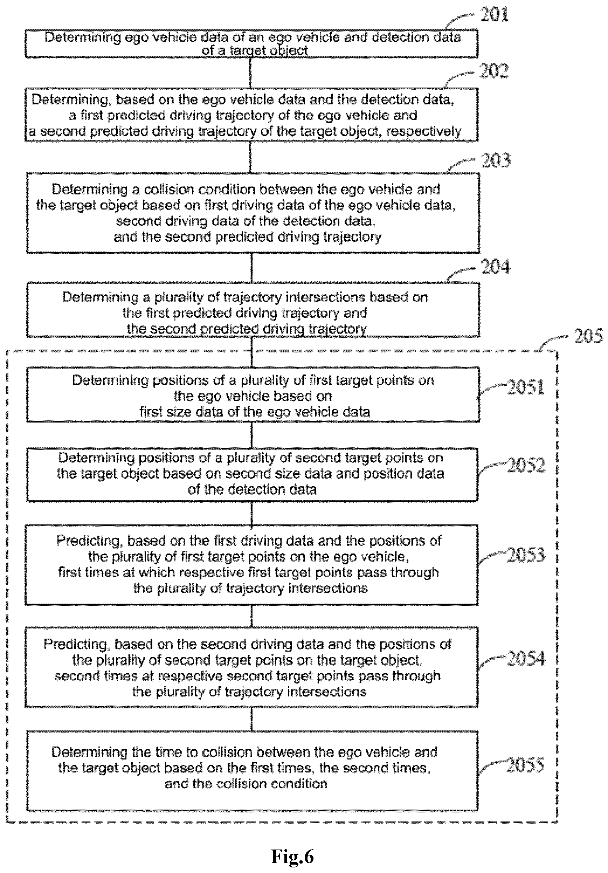

As shown in FIG. 6, on the basis of the embodiment shown in FIG. 2, step S205 may include steps S2051 to S2055.

S2051. Determining positions of a plurality of first target points on the ego vehicle based on first size data of the ego vehicle data.

For example, the first size data may be a length and a width of the ego vehicle body, and the plurality of first target points on the ego vehicle may be four corner points of the ego vehicle body, such as points A1 to D1 in FIG. 3. Certainly, the first target points may also be other points on the ego vehicle body, such as a middle point of each edge of the ego vehicle body. This is not limited in this embodiment of this disclosure. Positions of the plurality of first target points on the ego vehicle may be understood as coordinate positions of the plurality of first target points in the coordinate system of the ego vehicle.

S2052. Determining positions of a plurality of second target points on the target object based on second size data and position data of the detection data.

For example, the second size data may be information about the size of the target object, and the position data of the detection data may be the position of the target object. If the size of the target object is relatively large, the position of the target object may be a position of a center point of the target object. The plurality of second target points on the target object may be contour boundary points of the target object, such as points A2 to D2 of the target vehicle in FIG. 3. Certainly, the second target point may also be other points on the target vehicle body, such as a middle point of each edge of the target vehicle body. This is not limited in this embodiment of this disclosure. Positions of the plurality of second target points on the target object may be understood as coordinate positions of the plurality of second target points in the coordinate system of the ego vehicle.

S2053. Predicting, based on the first driving data and the positions of the plurality of first target points on the ego vehicle, first times at which respective first target points pass through the plurality of trajectory intersections.

For example, the first driving includes but is not limited to one or more of the following: a velocity, acceleration, and deceleration of the ego vehicle. Thus, the first time when each first target point passes through each trajectory intersection is predicted by using the first driving data and the positions of the plurality of first target points on the ego vehicle in the coordinate system of the ego vehicle. For example, first times at which the points A1 to D1 pass through the points Q1 to Q4 may be predicted based on the velocity of the ego vehicle and coordinates of the points A1 to D1 on the ego vehicle in FIG. 3.

S2054. Predicting, based on the second driving data and the positions of the plurality of second target points on the target object, second times at respective second target points pass through the plurality of trajectory intersections.

For example, the second driving data includes but is not limited to one or more of the following: a velocity, acceleration, and deceleration of the target object. Thus, the second time when each second target point passes through each trajectory intersection is predicted by using the second driving data and the positions of the plurality of second target points on the target object in the coordinate system of the ego vehicle. For example, second times at which the points A2 to D2 pass through the points Q1 to Q4 may be predicted based on a velocity of the target vehicle and coordinates of points A2 to D2 in the target vehicle in FIG. 3.

S2055. Determining the time to collision between the ego vehicle and the target object based on the first times, the second times, and the collision condition.

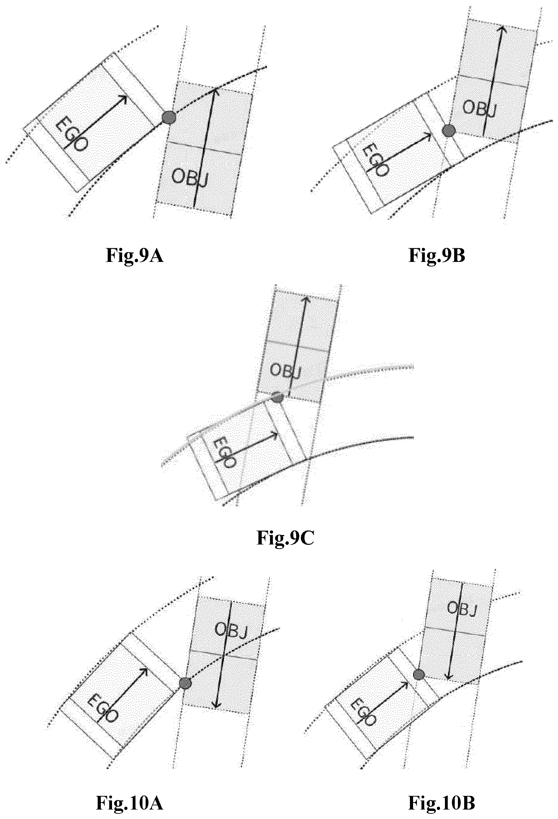

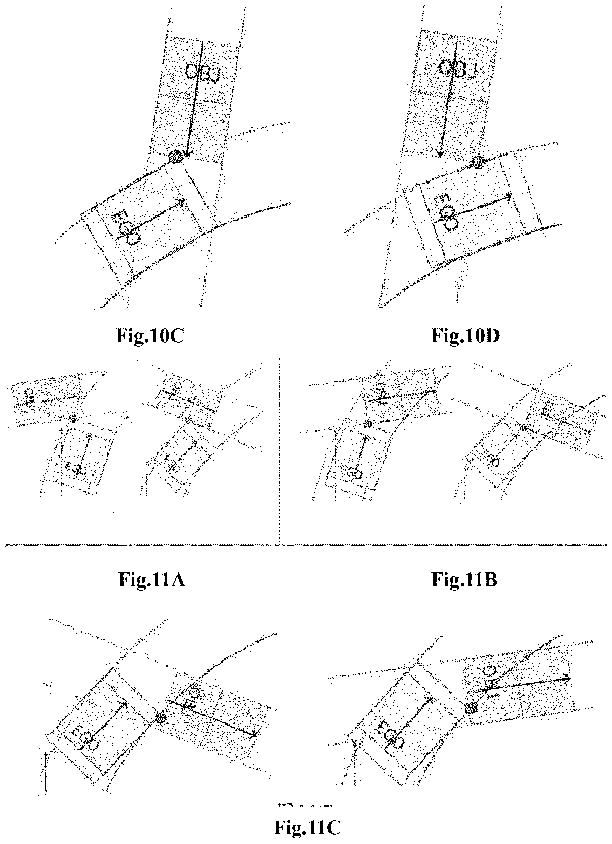

For example, different collision conditions may be analyzed to analyze collision postures between the ego vehicle and the target object under various collision conditions. Further, when there is a risk of collision between the ego vehicle and the target object, based on the collision posture corresponding to the collision condition between the ego vehicle and the target object, at least one target time is determined from the first times and the second times. The time to collision between the ego vehicle and the target object is calculated based on the at least one target time. For example, if the collision condition between the ego vehicle and the target vehicle is a situation A of the working condition 1 in FIG. 9, target timed include $T_{OBJ\_B2-Q1}$, $T_{EGO\_D1-Q1}$, and $T_{OBJ\_A2-Q1}$, and a time to collision TTC determined based on the plurality of target time periods is $T_{EGO\_D1-Q1}$. For another example, if the collision condition between the ego vehicle and the target vehicle is a situation B of the working condition 3 in FIG. 10, target time periods are $T_{OBJ\_B2-Q3}$, $T_{EGO\_D1-Q3}$, $T_{EGO\_D1-Q4}$, and $T_{OBJ\_C2-Q4}$, and a time to collision TTC determined based on the plurality of target time periods is a certain time within $T_{EGO\_D1-Q4}$ to $T_{EGO\_D1-Q3}$.

According to the method for determining a time to collision provided in this embodiment of this disclosure, the time to collision between the ego vehicle and the target object is determined based on the first times, the second times, and the collision condition. In this way, the corresponding TTC can be resolved quickly and accurately under different conditions based on a time when the target point on the vehicle reaches the intersection and a time when the target point on the target object reaches the intersection.

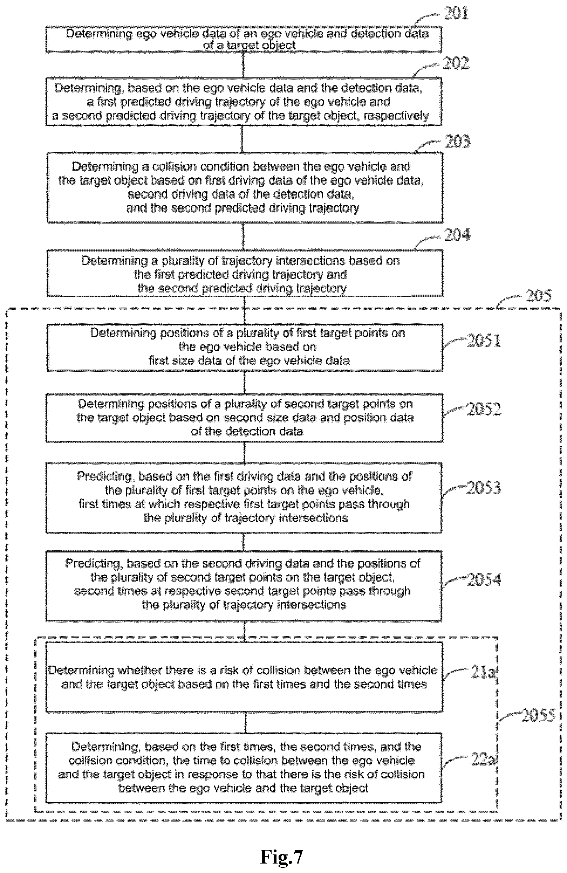

As shown in FIG. 7, on the basis of the embodiment shown in FIG. 6, step S2055 may include steps S21a and S22a.

Step S21a. Determining whether there is a risk of collision between the ego vehicle and the target object based on the first times and the second times.

For example, times at which respective first target points enter a trajectory intersection area may be determined based on the first times when respective first target points pass through trajectory intersections. If the times each are greater than a third preset value (for example, 4 seconds), it is directly determined that there are no risks of collision. Otherwise, it is continued to determine, based on the first times, a time $TTE_{EGO}$ when the ego vehicle enters the intersection area and a time $TTL_{EGO}$ when the ego vehicle leaves the intersection area; and determine, based on the second times, a time $TTE_{OBJ}$ when the target object enters the intersection area and a time $TTL_{OBJ}$ when the target object leaves the intersection area. Further, if it is satisfied that $TTE_{EGO}<TTL_{OBJ}$ or $TTL_{EGO}>TTE_{OBJ}$, it proves that there is a risk of collision between the ego vehicle and the target object, and collisions may occur. Correspondingly, if it is satisfied that $TTE_{EGO}>TTL_{OBJ}$ or $TTL_{EGO}<TTE_{OBJ}$, it proves that there are no risks of collision between the ego vehicle and the target object, and collisions would not occur. Correspondingly, if it is satisfied that $TTE_{EGO}<TTL_{OBJ}$ or $TTL_{EGO}>TTE_{OBJ}$, the following step S22a is performed.

Step S22a. Determining, based on the first times, the second times, and the collision condition, the time to collision between the ego vehicle and the target object in response to that there is the risk of collision between the ego vehicle and the target object.

According to the method for determining a time to collision provided in this embodiment of this disclosure, whether there is a risk of collision between the ego vehicle and the target object is determined based on the first times when a plurality of target points on the ego vehicle respectively pass through various trajectory intersections and second times when a plurality of target points on the target object respectively pass through various trajectory intersections. When there is a risk of collision, the time to collision between the ego vehicle and the target object is further determined based on the first times, the second times, and the collision condition. In this way, whether there is a risk of collision can be determined first. When there is a risk of collision, the corresponding TTC can be resolved quickly and accurately in steps according to different working conditions based on the time when the target point on the ego vehicle reaches the intersection and the time when the target point on the target object reaches the intersection.

In some embodiments, determining whether there is a risk of collision between the ego vehicle and the target object based on the first times and the second times includes: sorting a plurality of first times based on values of the first times at which respective first target points pass through the trajectory intersections, and determining a first driving-in time and a first driving-away time of the ego vehicle among the plurality of first times based on a sorting result; sorting a plurality of second times based on values of the second times at which respective second target points pass through the trajectory intersections, and determining a second driving-in time and a second driving-away time of the target object among the plurality of second times based on a sorting result; and determining whether there is the risk of collision between the ego vehicle and the target based on the first driving-in time, the first driving-away time, the second driving-in time, and the second driving-away time.

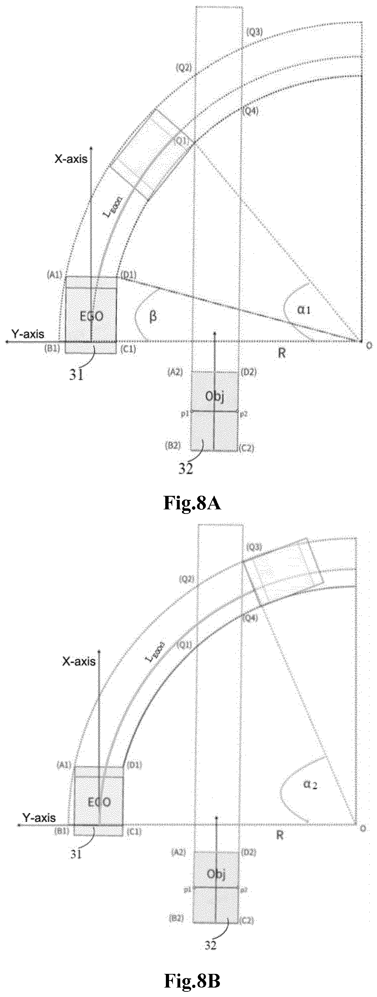

For example, FIG. 8A and FIG. 8B are schematic diagrams of the ego vehicle 31 driving to different positions, and

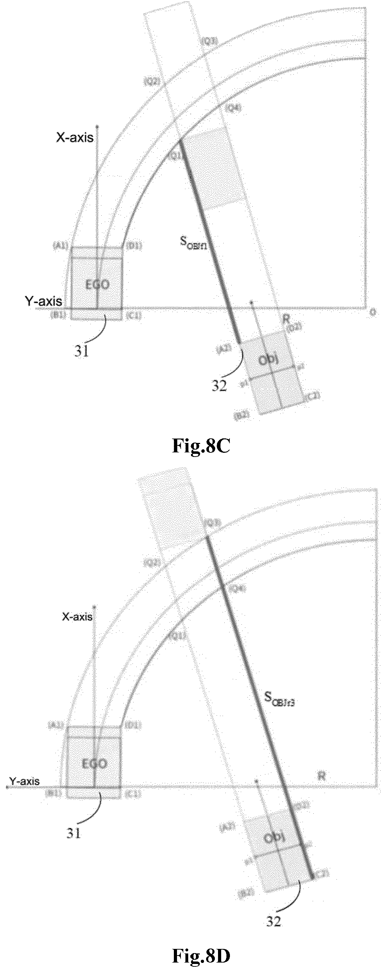

FIG. 8C and FIG. 8D are schematic diagrams of the target vehicle 32 driving to different positions.

First, an angle $\alpha_{EGOfi}$ at which the front bumper of the ego vehicle 31 passes through an intersection ($Q_i$, where i = 1 ... 4) may be determined through the ego vehicle data. As shown in FIG. 8A, $\alpha_1$ represents an angle at which the front bumper of the ego vehicle 31 passes through the intersection Q1. Similarly, an angle $\alpha_{EGOri}$ at which the rear bumper of the ego vehicle 31 passes through an intersection ($Q_i$, where i = 1 ... 4) may be determined through the ego vehicle data. As shown in FIG. 8B, $\alpha_2$ represents an angle at which the rear bumper of the ego vehicle 31 passes through the intersection Q3.

Further, an arc length $L_{EGOfi}$(i = 1 ...4) driven from the front bumper of the ego vehicle 31 to the intersection ($Q_i$, where i = 1 ... 4) is determined according to the following formula (1):

$$L_{EGOfi} = (\alpha_{EGOfi} - \beta) * R \qquad (1).$$

Wherein R represents the turning radius of the ego vehicle. As shown in FIG. 8A, β represents an angle that takes a center O of a concentric circle as a vertex, a connection line between the front bumper of the ego vehicle 31 and the center O as one edge, and the Y-axis of the coordinate system of the ego vehicle as the other edge. $L_{EGOf1}$ in FIG. 8A represents an arc length driven from the front bumper of the ego vehicle 31 to the intersection Q1.

Similarly, an arc length $L_{EGOri}$(i = 1 ... 4) driven from the rear bumper of the ego vehicle 31 to the intersection (Qi, where i = 1 ... 4) is determined according to the following formula (2):

$$L_{EGOri} = (\alpha_{EGOri}) * R \qquad (2).$$

Wherein R represents the turning radius of the ego vehicle. As shown in FIG. 8B, $L_{EGOr3}$ represents an arc length driven from the rear bumper of the ego vehicle 31 to the intersection Q3.

Generally, the ego vehicle 31 may decelerate in a case of dangers. If the ego vehicle can stop before reaching the intersection, there are no risks of collision. Therefore, a distance $S_{EGO}$ required for the ego vehicle 31 to stop may be determined according to the following formula (3):

$$S_{EGO} = \frac{V_{EGO}^2}{2a_{EGO}} \qquad (3).$$

Wherein $V_{EGO}$ represents the velocity of the ego vehicle, and $a_{EGO}$ represents current deceleration of the ego vehicle.

If it is satisfied that $L_{EGOfi} < S_{EGO}$, it indicates that the ego vehicle 31 would not stop before reaching the intersection, and there is a risk of collision. Further, a time $T_{EGOfi}$ when the front bumper of the ego vehicle 31 passes through the intersection is determined according to the following formula (4), and a time $T_{EGOri}$ when the rear bumper of the ego vehicle 31 passes through the intersection is determined according to the following formula (5):

$$L_{EGOfi} = V_{EGO} * T_{EGOfi} + \frac{1}{2} a_{EGO} * T_{EGOfi}^2 \quad (i = 1 ... 4) \qquad (4);$$

and

$$L_{EGOri} = V_{EGO} * T_{EGOri} + \frac{1}{2} a_{EGO} * T_{EGOri}^2 \quad (i = 1 ... 4) \qquad (5).$$

If the formulas have no solutions, it proves that there are no risks of collision. If the formulas have solutions, sorting is performed according to values of the times. A minimum time after the sorting is a time $TTE_{EGO}$ when the ego vehicle 31 enters an intersection area, that is, the first driving-in time. A maximum time after the sorting is a time $TTL_{EGO}$ when the ego vehicle 31 leaves the intersection area, that is, the first driving-away time.

In some examples, an arc length $S_{OBJfi}$(i = 1 ... 4) driven from the front bumper of the target vehicle 32 to the intersection (Qi, where i = 1 ... 4) may be determined according to the following formula (6):

$$S_{OBJfi} = \sqrt{(x_{Qi} - x_{OBJi})^2 + (y_{Qi} - y_{OBJi})^2} \qquad (6).$$

Wherein $(x_{Qi}, y_{Qi})$ represents coordinates of four intersections, and $(x_{OBJi}, y_{OBJi})$ represents coordinates of the points A2, B2, C2, and D2 on the target vehicle 32. As shown in FIG. 8C, $S_{OBJf1}$ represents a distance driven from a front bumper of the target vehicle 32 to the intersection Q1.

Similarly, a distance $S_{OBJri}$(i = 1 ... 4) driven from a rear bumper of the target vehicle 32 to the intersection (Qi, where i = 1 ... 4) may be determined according to the following formula (7):

$$S_{OBJri} = \sqrt{(x_{Qi} - x_{OBJi})^2 + (y_{Qi} - y_{OBJi})^2} \qquad (7).$$

Wherein $(x_{Qi}, y_{Qi})$ represents coordinates of four intersections, and $(x_{OBJi}, y_{OBJi})$ represents coordinates of the points A2, B2, C2, and D2 on the target vehicle 32. As shown in FIG. 8D, $S_{OBJr3}$ represents a distance driven from the rear bumper of the target vehicle 32 to the intersection Q3.

Generally, the target vehicle 32 may decelerate in a case of dangers. If the target vehicle 32 can stop before reaching the intersection, there are no risks of collision. Therefore, a distance $S_{OBJ}$ required for the target vehicle 32 to stop may be determined according to the following formula (8):

$$S_{OBJ} = \frac{v_{OBJ}^2}{2a_{OBJ}} \qquad (8).$$

$V_{OBJ}$ represents a velocity of the target vehicle 32, and $a_{OBJ}$ represents current deceleration of the target vehicle 32.wherein

If it is satisfied that $S_{OBJfi}<S_{OBJ}$, it indicates that the target vehicle 32 would not stop before reaching the intersection, and there is a risk of collision. Further, a time $T_{OBJfi}(i = 1 ...4)$ when the front bumper of the target vehicle 32 passes through the intersection is determined according to the following formula (9), and a time $T_{OBJri}(i = 1 ...4)$ when the rear bumper of the target vehicle 32 passes through the intersection is determined according to the following formula (10):

$$S_{OBJfi} = V_{OBJ} * T_{OBJfi} + \frac{1}{2} a_{OBJ} * T_{OBJfi}^2 \qquad (9);$$

and

$$S_{OBJri} = V_{OBJ} * T_{OBJri} + \frac{1}{2} a_{OBJ} * T_{OBJri}^2 \qquad (10).$$

If the formulas have no solutions, it proves that there are no risks of collision. If the formulas have solutions, sorting is performed according to values of the times. A minimum time after the sorting is a time $TTE_{OBJ}$ when the target vehicle 32 enters an intersection area, that is, the second driving-in time. A maximum time after the sorting is a time $TTL_{OBJ}$ when the target vehicle 32 leaves the intersection area, that is, the second driving-away time.

Finally, whether there is a risk of collision between the ego vehicle 31 and the target object 32 may be determined based on $TTE_{EGO}$, $TTL_{EGO}$, $TTE_{OBJ}$, and $TTL_{OBJ}$.

As shown in FIGS. 9A to 9C, on the basis of FIG. 4A, the working condition 1 may be subdivided into three situations (as shown in FIGS. 9A to 9C), which respectively are: A. A front corner of the ego vehicle collides with the target vehicle body (as shown in FIG. 9A). In this case, the collision condition is $T_{OBJ\_B2-Q1} \geq T_{EGO\_D1-Q1} \geq T_{OBJ\_A2-Q1}$, that is, $T_{OBJr1} \geq T_{EGOf1} \geq T_{OBJf1}$; and the time to collision is $T_{EGO\_D1-Q1}$, that is, $T_{EGOf1}$ B. The front bumper of the ego vehicle collides with a rear corner of a target vehicle (as shown in FIG. 9B). In this case, the collision condition is $T_{OBJ\_B2-Q2} > T_{EGO\_A1-Q2} > T_{EGO\_D1-Q1} > T_{OBJ\_B2-Q1}$, that is, $T_{OBJr2} > T_{EGOf2} > T_{EGOf1} > T_{OBJr1}$; and the time to collision is ($T_{EGO\_D1-Q1}$, $T_{EGO\_A1-Q2}$), that is, ($T_{EGOf1}$, $T_{EGOf2}$). C. The front corner of the ego vehicle collides with a rear bumper of the target vehicle (as shown in FIG. 9C). In this case, the collision condition is $T_{OBJ\_C2-Q3} > T_{EGO\_A1-Q3} > T_{EGO\_A1-Q2} > T_{OBJ-B2-Q2}$, that is, $T_{OBJr3} > T_{EGOf3} > T_{EGOf2} > T_{OBJr2}$; and the time to collision is ($T_{EGO\_A1-Q2}$, $T_{EGO\_A1-Q3}$), that is, ($T_{EGOf2}$, $T_{EGOf3}$). $T_{OBJ-B2-Q1}$ refers to a time when the point B2 in the target vehicle passes through the intersection Q1, and $T_{EGO-A1-Q3}$ refers to a time when the point A1 in the ego vehicle passes through the intersection Q3. Similar expressions in this embodiment of this disclosure may be understood with reference to this description, and details are not described below.

As shown in FIGS. 10A to 10D, on the basis of FIG. 4B, the working condition 2 may be subdivided into four situations (as shown in FIGS. 10A to 10D), which respectively are: A. The front corner of the ego vehicle collides with the target vehicle body (as shown in FIG. 10A). In this case, the collision condition is $T_{OBJ\_C2-Q1} \geq T_{EGO\_D1-Q1} \geq T_{OBJ\_D2-Q1}$, that is, $T_{OBJr1} \geq T_{EGOf1} \geq T_{OBJf1}$; and the time to collision is $T_{EGO\_D1-Q1}$, that is, $T_{EGOf1}$ B. The front corner of the target vehicle collides with the front bumper of the ego vehicle (as shown in FIG. 10B). In this case, the collision condition is $T_{EGO\_A1-Q2} > T_{OBJ-D2-Q2}$ and $T_{OBJ\_D2-Q1} > T_{EGO\_D1-Q1}$, that is, $T_{EGOf2} > T_{OBJf2}$ and $T_{OBJf1} > T_{EGOf1}$; and the time to collision is $Min(T_{EGO\_A1-Q2}, T_{OBJ\_D2-Q1})$ and $Max(T_{OBJ\_D2-Q2}, T_{EGO\_D1-Q1})$, that is, $Min(T_{EGOf2}, T_{OBJf1})$ and $Max(T_{OBJf2}, T_{OBJr1})$. C. The front corner of the ego vehicle collides with the front bumper of the target vehicle (as shown in FIG. 10C). In this case, the collision condition is $T_{OBJ\_D2-Q2} > T_{EGO\_A1-Q2}$ and $T_{EGO\_A1-Q3} > T_{OBJ\_A2-Q3}$, that is, $T_{OBJf2} > T_{EGOf2}$ and $T_{EGOf3} > T_{OBJf3}$; and the time to collision is $Min(T_{EGO\_A1-Q2}, T_{OBJ\_A2-Q3})$ and $Max(T_{OBJ\_D2-Q2}, T_{EGO\_A1-Q3})$, that is, $Min(T_{EGOf2}, T_{OBJf3})$ and $Max(T_{OBJf2}, T_{EGOf3})$. D. The front corner of the target vehicle collides with the ego vehicle body (as shown in FIG. 10D). In this case, the collision condition is $T_{EGO\_B1-Q3} \geq T_{OBJA2-Q3} \geq T_{EGO\_A1-Q3}$, that is, $T_{EGOr3} \geq T_{OBJf3} \geq T_{EGOf3}$; and the time to collision is $T_{OBJ\_A2-Q3}$, that is, $T_{OBJf3}$. $Min(T_{EGO\_A1-Q2}, T_{OBJ\_D2-Q1})$ refers to a minimum time between the time $T_{EGO\_A1-Q2}$ and the time $T_{OBJ\_D2-Q1}$. Similar expressions in this embodiment of this disclosure may be understood and analogized with reference to this description, and details are not described below.

As shown in FIGS. 11A to 11C, on the basis of FIG. 4C and FIG. 4F, the working conditions 3 and 6 may be subdivided into three situations (as shown in FIGS. 11A to 11C), which respectively are: A. The front corner of the ego vehicle collides with the target vehicle body (as shown in FIG. 11A). In this case, the collision condition is $T_{OBJ\_C2-Q1} \geq T_{EGO\_A1-Q1} \geq T_{OBJ\_D2-Q1}$, that is, $T_{OBJr1} \geq T_{EGOf1} \geq T_{OBJf1}$; and the time to collision is $T_{EGOD1-Q1}$, that is, $T_{EGOf1}$. B. The front bumper of the ego vehicle collides with the rear corner of the target (as shown in FIG. 11B). In this case, the collision condition is $T_{OBJ\_B2\text{-}Q3} > T_{EGO\_D1\text{-}Q3} > T_{EGO\_D1\text{-}Q4} > T_{OBJ\_C2\text{-}Q4}$, that is, $T_{OBJr3} > T_{EGOf3} > T_{EGOf4} > T_{OBJr4}$; and the time to collision is $(T_{EGO\text{-}D1\text{-}Q4}, T_{EGO\_D1\text{-}Q3})$, that is, $(T_{EGOf4}, T_{EGOf3})$. C. The front corner of the ego vehicle collides with the rear bumper of the target vehicle (as shown in FIG. 11C). In this case, the collision condition is $T_{OBJ\_B2\text{-}Q3} > T_{EGO\_D1\text{-}Q3} > T_{EGO\_D1\text{-}Q4} > T_{OBJ\_C2\text{-}Q4}$, that is, $T_{OBJr2} > T_{EGOf3} > T_{EGOf4} > T_{OBJr4}$; and the time to collision is $(T_{EGO\text{-}D1\text{-}Q4}, T_{EGO\text{-}D1\text{-}Q3})$, that is, $(T_{EGOf4}, T_{EGOf3})$.

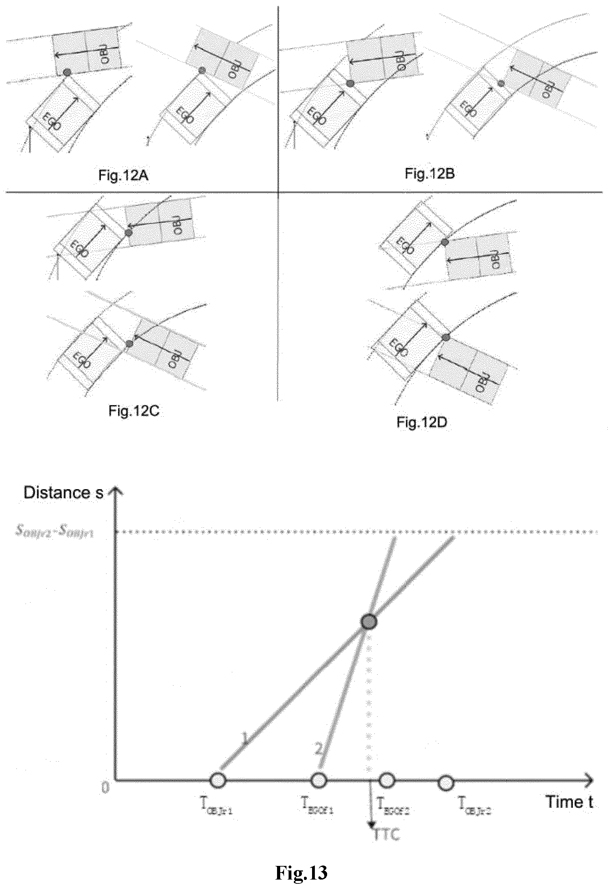

As shown in FIGS. 12A to 12D, on the basis of FIG. 4D and FIG. 4E, the working conditions 4 and 5 may be subdivided into four situations (as shown in FIGS. 12A to 12D), which respectively are: A. The front corner of the ego vehicle collides with the target vehicle body (as shown in FIG. 12A). In this case, the collision condition is $T_{OBJ\_B2\text{-}Q1} \geq T_{EGO\_A1\text{-}Q1} \geq T_{OBJ\_A2\text{-}Q1}$, that is, $T_{OBJr1} \geq T_{EGOf1} \geq T_{OBJf1}$; and the time to collision is $T_{EGO\_A1\text{-}Q1}$, that is, $T_{EGOf1}$. B. The front bumper of the ego vehicle collides with the front corner of the target vehicle (as shown in FIG. 12B). In this case, the collision condition is $T_{OBJ\_A2\text{-}Q1} > T_{EGO\_A1\text{-}Q1}$ and $T_{EGO\_D1\text{-}Q4} > T_{OBJ\_A2\text{-}Q4}$, that is, $T_{OBJf1} > T_{EGOf1}$ and $T_{EGOf4} > T_{OBJf4}$; and the time to collision is $\text{Min}(T_{OBJ\_A2\text{-}Q1}, T_{EGO\_D1\text{-}Q4})$ and $\text{Max}(T_{EGO\_A1\text{-}Q1}, T_{OBJ\_A2\text{-}Q4})$, that is, $\text{Min}(T_{OBJf1}, T_{EGOf4})$ and $\text{Max}(T_{EGOf1}, T_{OBJf4})$. C. The front corner of the ego vehicle collides with the front bumper of the target vehicle (as shown in FIG. 12C). In this case, the collision condition is $T_{OBJ\_A2\text{-}Q4} > T_{EGO\_D1\text{-}Q4}$ and $T_{EGO\_D1\text{-}Q3} > T_{OBJ\_D2\text{-}Q3}$, that is, $T_{OBJf4} > T_{EGOf4}$ and $T_{EGOf3} > T_{OBJf3}$; and the time to collision is $\text{Min}(T_{OBJ\_A2\text{-}Q4}, T_{EGO\_D1\text{-}Q3})$ and $\text{Max}(T_{EGO\_D1\text{-}Q4}, T_{OBJ\_D2\text{-}Q3})$, that is, $\text{Min}(T_{OBJf4}, T_{EGOf3})$ and $\text{Max}(T_{EGOf1}, T_{OBJf3})$. D. The front corner of the target vehicle collides with the ego vehicle body (as shown in FIG. 12D). In this case, the collision condition is $T_{EGO\_C1\text{-}Q3} > T_{OBJ\_D2\text{-}Q3} \geq T_{EGO\_D1\text{-}Q3}$, that is, $T_{EGOr3} \geq T_{OBJf3} > T_{EGOf3}$; and the time to collision is $T_{OBJ\_D2\text{-}Q3}$, that is, $T_{OBJf3}$.

Based on FIGS. 9A to FIGS. 12D described above, in combination with the parameters in FIG. 8A to FIG. 8D, detailed calculation processes of the time to collision TTC corresponding to the working conditions 1 to 6 are as follows.

Working condition 1_A: The front corner of the ego vehicle collides with the target vehicle body. In this case, the front bumper of the ego vehicle reaches the intersection Q1 simultaneously, or later than the front bumper of the target, and also reaches the intersection Q1 simultaneously, or later than the rear bumper of the target. Therefore, a condition $T_{OBJ\_B2\text{-}Q1} \geq T_{EGO\_D1\text{-}Q1} \geq T_{OBJ\_A2\text{-}Q1}$, that is, $T_{OBJr1} \geq T_{EGOf1} \geq T_{OBJf1}$, is satisfied. In this case, the TTC is $T_{EGO\_D1\text{-}Q1}$, that is, $T_{EGOf1}$ The working condition 1_A refers to the situation A in the condition 1. Similar expressions in this embodiment of this disclosure may be understood with reference to this description, and details are not described below.

Condition 1_B: The front bumper of the ego vehicle collides with the rear corner of the target vehicle, reaches the intersection Q1 later than the rear bumper of the target vehicle, and reaches the intersection Q2 earlier than the rear bumper of the target vehicle. Therefore, a condition $T_{OBJ\_B2\text{-}Q2} > T_{EGOA1\text{-}Q2} > T_{EGO\_D1\text{-}Q1} > T_{OBJ\_B2\text{-}Q1}$, that is, $T_{OBJr2} > T_{EGOf2} > T_{EGOf1} > T_{OBJr1}$, is satisfied. In this case, the TTC is $(T_{EGO\_D1\text{-}Q1}, T_{EGO\_A1\text{-}Q2})$, that is, $(T_{EGOf1}, T_{EGOf2})$.

In other words, when solving the condition 1_B, it may be assumed that the front bumper of the ego vehicle moves at a constant speed from the intersection Q1 to the intersection Q2, and the rear bumper of the ego vehicle also moves at a constant speed from the intersection Q1 to the intersection Q2. Further, as shown in FIG. 13, line 1 is a linear equation for a distance and a time $(S_{OBJr2} - S_{BJr1})$ when a point B2 (a collision point) on the target vehicle passes through the intersections Q1 and Q2. Line 2 is a linear equation for a distance $(L_{EGOr2} - L_{EGOr1})$ and a time when a collision point on the front bumper of the ego vehicle (that is, a point B2, which is also an intersection of the front bumper of the ego vehicle and a connection line between Q1 and Q2) passes through Q1 and Q2. A time corresponding to an intersection of the line 1 and the line 2 is the time to collision TTC, which may be obtained by solving equations of the collision point on the target vehicle and on the ego vehicle, simultaneously. A horizontal axis in FIG. 13 represents time, and a vertical axis represents distance.

The equation (that is, the line 1) for the collision point on the target vehicle and the equation (that is, the line 2) for the collision point on the ego vehicle may be determined according to the following formulas (11) and (12), respectively:

$$y = \frac{S_{OBJr2} - S_{OBJr1}}{T_{OBJr2} - T_{OBJr1}} * (x - T_{OBJr1}) \qquad (11);$$

and

$$y = \frac{L_{EGOr2} - L_{EGOr1}}{T_{EGOf2} - T_{EGOf1}} * (x - T_{EGOf1}) \qquad (12).$$

Solving the equations (11) and (12) simultaneously may obtain the time to collision TTC between the ego vehicle and the target vehicle, which may be obtained according to the following equation (13):

$$TTC = x = \frac{T_{OBJr1} * T_{EGOf2} - T_{EGOf1} * T_{OBJr2}}{T_{EGOf2} + T_{OBJr1} - T_{EGOf1} - T_{OBJr2}} \qquad (13).$$

Similarly, this principle may be used to solve for the working conditions 1_C, 3_B, 3_C, and 6_B. Four time periods included in the collision conditions corresponding to the working conditions 1_C, 3_B, 3_C, and 6_B in a schematic diagram of working conditions are arranged in a descending order as $T_1$, $T_2$, $T_3$, and $T_4$, and it is assumed that a distance that the collision point can move is H.

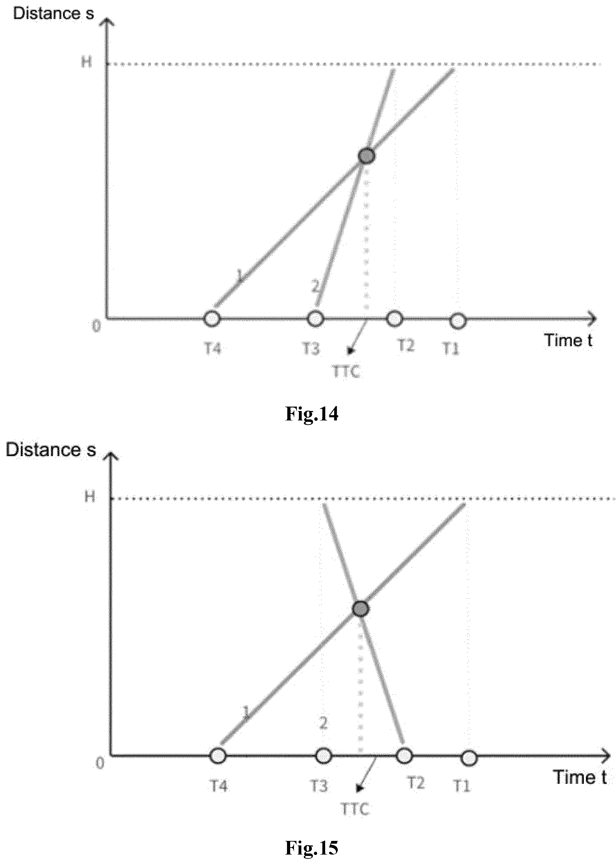

Further, as shown in FIG. 14, a horizontal axis represents time and a vertical axis represents distance. The line 1 represents a linear equation for a movement distance and time of the target vehicle, and the line 2 represents a linear equation for a movement distance and time of the ego vehicle. By solving the two equations simultaneously, the time to collision TTC between the ego vehicle and the target vehicle in the working conditions 1_C, 3_B, 3_C, and 6_B may be obtained. This TTC may be obtained according to the following formula (14):

$$\mathrm{TTC} = \frac{T_1 * T_3 - T_2 * T_4}{T_1 + T_3 - T_2 - T_4} \qquad (14).$$

Similarly, a principle for calculating the TTC in working condition 2_B, 2_C, 4_B, 4_C, 5_B, and 5_C is same as that described above.

Taking the working condition 2-B as an example: In the condition 2_B, the front bumper of the ego vehicle collides with the front corner of the target vehicle, reaches the point Q1 earlier than the rear bumper of the target vehicle, and reaches the point Q2 later than the front bumper of the target vehicle. Therefore, a condition $T_{EGO\_A1-Q2} > T_{OBJ\_D2-Q2}$ && $T_{OBJ\_D2-Q1} > T_{EGO\_D1-Q1}$, that is, $(T_{EGOf2} > T_{OBJf2})$ && $(T_{OBJf1} > T_{EGOf1})$, is satisfied. In this case, the time to collision TTC satisfies Min($T_{EGO\_A1-Q2}$, $T_{OBJ\_D2-Q1}$) and Max($T_{OBJ\_D2-Q2}$, $T_{EGO\_D1-Q1}$), that is, Min($T_{EGOf2}$, $T_{OBJf1}$) and Max($T_{OBJf2}$, $T_{OBJr1}$).

Because only a magnitude relationship between some of the four time periods described above is learned, if it is assumed that $T_{EGO\_A1-Q2} > T_{OBJ\_D2-Q1}$ and $T_{OBJ-D2-Q2} > T_{EGO\_D1-Q1}$, the time periods satisfy that $T_{EGO\_A1-Q2} > T_{OBJ\_D2-Q2}$ && $T_{OBJ\_D2-Q1} > T_{EGO\_D1-Q1}$, that is, $T_{EGO\_A1-Q2} > T_{OBJ\_D2-Q1} > T_{OBJ\_D2-Q2} > T_{EGO\_D1-Q1}$ ($T_{EGOf2} > T_{OBJf1} > T_{OBJf2} > T_{EGOf1}$).

Further, the four time periods are arranged in a descending order to obtain $T_1$, $T_2$, $T_3$, and $T_4$, and it is assumed that the distance that the collision point can move is H. Further, as shown in FIG. 15, the horizontal axis represents time, the vertical axis represents distance, the line 1 represents a linear equation for a distance ($L_{EGOf1}$-$L_{EGOf2}$) and time for the collision point on the ego vehicle (an intersection of the front bumper of the ego vehicle and the line connecting Q1 and Q2) to drive from Q1 to Q2, and the line 2 represents a linear equation for a distance ($S_{OBJf1}$-$S_{OBJf2}$) and time for the collision point on the target vehicle (the point D2, that is, the front corner of the target vehicle) to drive from Q1 to Q2. When the time is $T_{OBJf1}$, the collision point is already at Q2. Therefore, in this case, a target equation distance of the collision point is H. When the time is $T_{OBJf2}$, the target equation distance of the collision point is 0. A time corresponding to an intersection point of the two lines is the calculated time to collision TTC, which may be expressed according to the following formula (15):

$$\mathrm{TTC} = \frac{T_1 * T_2 - T_3 * T_4}{T_1 + T_2 - T_3 - T_4} \qquad (15).$$

If it is assumed that $T_{OBJ\_D2-Q1} > T_{EGO\_A1-Q2}$ and $T_{EGO\_D1-Q1} > T_{OBJ\_D2-Q2}$, the time periods satisfy that $T_{OBJ\_D2-Q1} > T_{EGO\_A1-Q2} > T_{EGO\_D1-Q1} > T_{OBJ\_D2-Q2}$. The time periods are arranged as $T_1$, $T_2$, $T_3$, and $T_4$ in a descending order. Therefore, the foregoing data may be used to form a formula to solve the TTC, and a calculation principle is same as that in FIG. 15. In this case, the formula of the TTC is consistent with the formula (15).

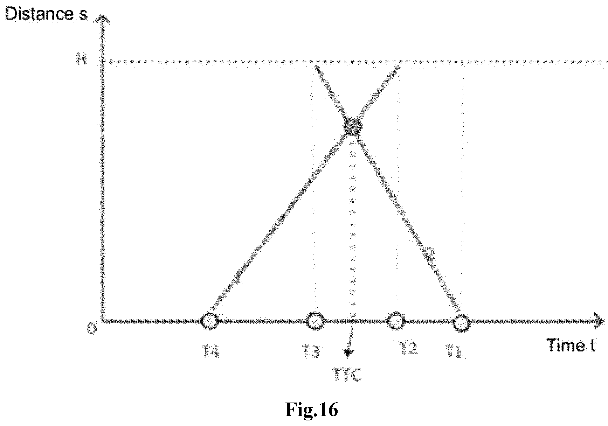

If it is assumed that $T_{EGO\_A1-Q2} > T_{OBJ\_D2-Q1}$ and $T_{EGO\_D1-Q1} > T_{OBJ\_D2-Q2}$, the time periods satisfy that $T_{EGO\_A1-Q2} > T_{OBJ\_D2-Q1} > T_{EGO\_D1-Q1} > T_{OBJ\_D2-Q2}$. The time periods are arranged as $T_1$, $T_2$, $T_3$, and $T_4$ in a descending order. Therefore, the foregoing data may be used to form a formula to solve the TTC, and a schematic diagram of the calculation principle is FIG. 16. In this case, the formula of the TTC is consistent with the formula (15).

If it is assumed that $T_{OBJ\_D2-Q1} > T_{EGO-A1-Q2}$ and $T_{OBJ-D2-Q2} > T_{EGO-D1-Q1}$, the time periods satisfy that $T_{OBJ\_D2-Q1} > T_{EGO\_A1-Q2} > T_{OBJ\_D2-Q2} > T_{EGO\_D1-Q1}$. The time periods are arranged as $T_1$, $T_2$, $T_3$, and $T_4$ in a descending order, and a schematic diagram of the calculation principle is FIG. 16. In this case, the formula of the TTC is consistent with the formula (15).

Generally, when a collision occurs when the ego vehicle turns while the target vehicle drives straight, there are a total of 21 collision conditions included.

In working conditions 1-A, 2-A, 3-A, and 6-A, it is satisfied that TTC = $T_{EGO\_D1-Q1}$, that is ($T_{EGOf1}$).

In working conditions 4-A and 5-A, it is satisfied that TTC = $T_{EGO\_A1-Q1}$, that is ($T_{EGOf1}$).

In a working condition 2-D, it is satisfied that TTC = $T_{OBJ\_A2-Q3}$, that is ($T_{OBJf3}$).

In working conditions 4-D and 5-D, it is satisfied that TTC = $T_{OBJ\_D2-Q3}$, that is ($T_{OBJf3}$).

In working conditions 1_B, 1_C, 3_B, 3_C, and 6_B, it is satisfied that $\mathrm{TTC} = \frac{T_1 * T_3 - T_2 * T_4}{T_1 + T_3 - T_2 - T_4}$.

In working conditions 2_B, 2_C, 4_B, 4_C, 5_B, and 5_C, it is satisfied that $TTC = \frac{T_1 * T_2 - T_3 * T_4}{T_1 + T_2 - T_3 - T_4}$.

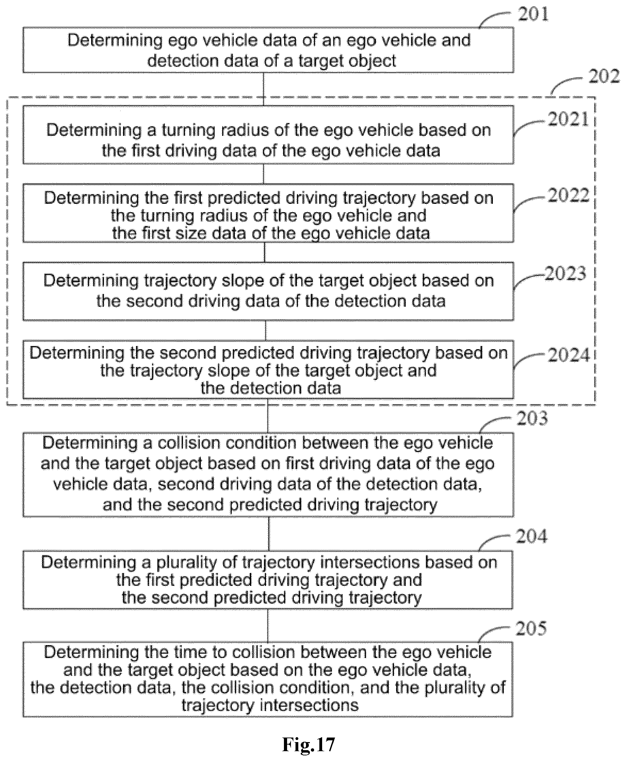

As shown in FIG. 17, on the basis of the embodiment shown in FIG. 2, step S202 may include steps S2021 to S2024.

Step S2021. Determining a turning radius of the ego vehicle based on the first driving data of the ego vehicle data.

For example, the first driving data is the steering wheel angle and the steering wheel speed of the ego vehicle. Further, the turning radius of the ego vehicle may be determined based on the first driving data, such as the steering wheel angle and the steering wheel speed.

Step S2022. Determining the first predicted driving trajectory based on the turning radius of the ego vehicle and the first size data of the ego vehicle data.

For example, when the ego vehicle is turning, the first predicted driving trajectory may be obtained based on the turning radius, a length, a width, and an axis length of the ego vehicle. The first predicted driving trajectory includes a predicted driving trajectory of an inner side of the driving lane of the ego vehicle 31 (such as a driving trajectory of the points C1 and D1 in FIG. 3) and a predicted driving trajectory of an outer side of the driving lane of the ego vehicle 31 (such as a driving trajectory of the points A1 and B1 in FIG. 3).

Step S2023. Determining trajectory slope of the target object based on the second driving data of the detection data.

For example, the second driving data includes the velocity and the acceleration of the target object.

Step S2024. Determining the second predicted driving trajectory based on the trajectory slope of the target object and the detection data.

For example, when the target object is driving on a straight line, the second predicted driving trajectory may be determined based on the trajectory slope and the position of the target object. The second predicted driving trajectory includes a predicted driving trajectory of an inner side of the driving lane of the target object (such as a driving trajectory of the points A2 and B2 of the target vehicle 32 in FIG. 3) and a predicted driving trajectory of an outer side of the driving lane of the target object (such as a driving trajectory of the points C2 and D2 of the target vehicle 32 in FIG. 3).

According to the method for determining a time to collision provided in this embodiment of this disclosure, the predicted driving trajectory of the ego vehicle is determined based on the turning radius of the ego vehicle, and the predicted driving trajectory of the target object is determined based on the trajectory slope of the target object. In this way, the predicted driving trajectories under different driving conditions can be determined based on different situations, thereby accurately obtaining the trajectory intersection to lay a good foundation for solving the TTC in the future.

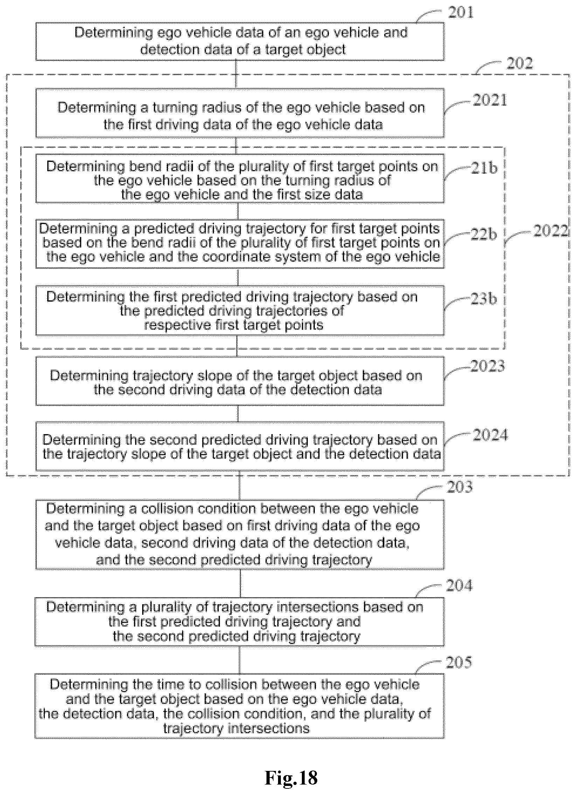

As shown in FIG. 18, on the basis of the embodiment shown in FIG. 17, step S2022 may include steps S21b to S23b.

S21b. Determining bend radii of the plurality of first target points on the ego vehicle based on the turning radius of the ego vehicle and the first size data.

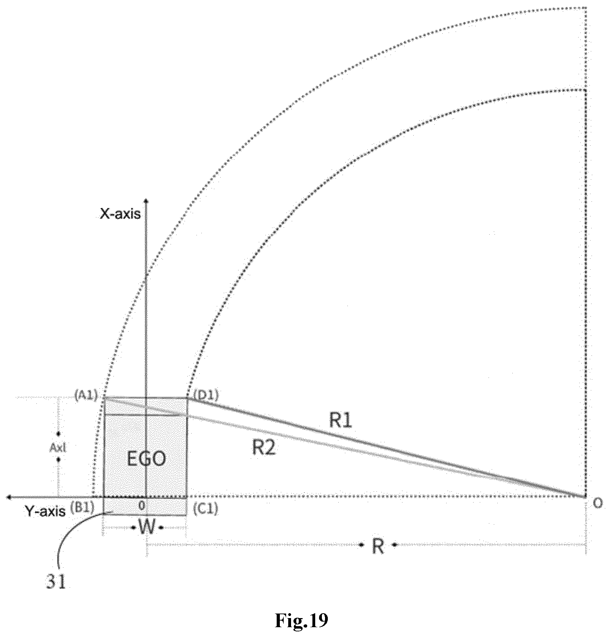

For example, the first size data includes the width of the ego vehicle and a distance from a center of the rear axle of the ego vehicle to the front bumper of the ego vehicle. As shown in FIG. 19, the turning radius R of the ego vehicle 31 is the distance between the coordinate origin 0 of the coordinate system of the ego vehicle and the center O of the concentric ring. An inner-side turning radius R1 of the driving lane of the ego vehicle 31 is a distance between the point D1 on the ego vehicle 31 and the center O, and an outer-side turning radius R2 of the driving lane of the ego vehicle 31 is a distance between the point A1 on the ego vehicle 31 and the center O. Further, R1 may be determined according to the following formula (16), and R2 may be determined according to the following formula (17):

$$R1 = \sqrt{\left(R - \frac{1}{2}W\right)^2 + Alx^2} \qquad (16);$$

and

$$R2 = \sqrt{\left(R + \frac{1}{2}W\right)^2 + Alx^2} \qquad (17).$$

Wherein W represents the width of the ego vehicle, and Alx represents the distance from the center of the rear axle of the ego vehicle to the front bumper of the ego vehicle. R1 represents a turning radius of the first target point D1, and R2 represents a turning radius of the first target point A1.

S22b. Determining a predicted driving trajectory for first target points based on the bend radii of the plurality of first target points on the ego vehicle and the coordinate system of the ego vehicle.

For example, as shown in FIG. 19, when the ego vehicle 31 turns right, a center coordinate O of the driving lane is (0, -R). Therefore, a predicted driving trajectory corresponding to R1 (that is, a predicted driving trajectory of the first target point D1) may be determined according to the following formula (18), and a predicted driving trajectory corresponding to R2 (that is, a predicted driving trajectory of the first target point A1) may be determined according to the following formula (19):

$$(x - 0)^2 + (y - (-R))^2 = R1^2 \qquad (18),$$

and

$$(x - 0)^2 + (y - (-R))^2 = R2^2 \qquad (19).$$

Wherein (x, y) represents a coordinate of a point in the corresponding predicted driving trajectory.

S23b. Determining the first predicted driving trajectory based on the predicted driving trajectories of respective first target points.

For example, the first predicted driving trajectory of the ego vehicle 31 includes at least the predicted driving trajectory of the first target point A1 and the predicted driving trajectory of the first target point D1.

According to the method for determining a time to collision provided in this embodiment of this disclosure, a plurality of predicted driving trajectories of the ego vehicle are determined based on the turning radius of the ego vehicle and the plurality of first target points on the ego vehicle. In this way, the predicted driving trajectory of the ego vehicle can be finely determined, thereby accurately obtaining the trajectory intersection to lay a good foundation for solving the TTC in the future.

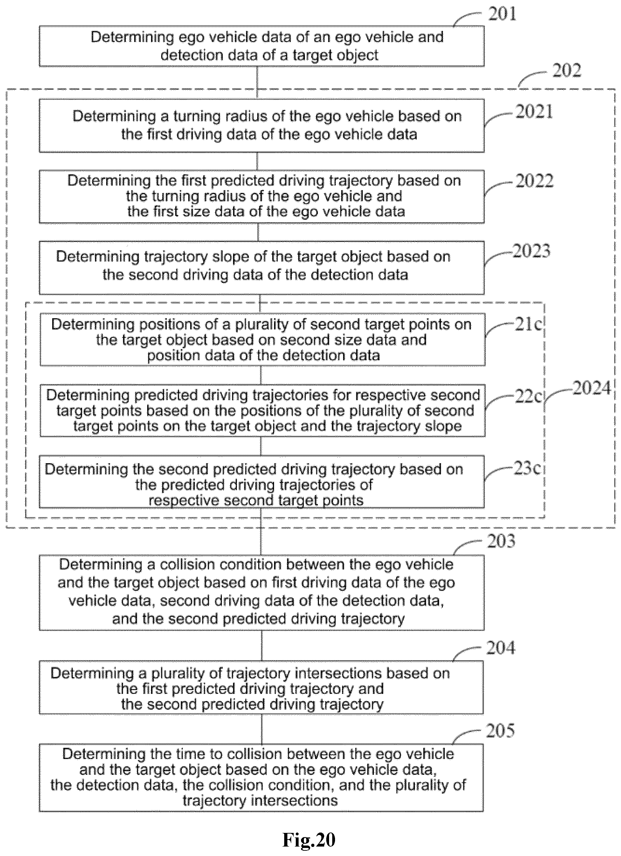

As shown in FIG. 20, on the basis of the embodiment shown in FIG. 17, step S2024 may include steps S21c to S23c.

Step S21c. Determining positions of a plurality of second target points on the target object based on second size data and position data of the detection data.

For example, the second size data include a length and a width of the target object, and the position data of the detection data includes a coordinate of a center point on the target object. As shown in FIG. 3, the positions of the plurality of second target points on the target object may be positions of the points p1 and p2 on the target vehicle 32.

Step S22c. Determining predicted driving trajectories for respective second target points based on the positions of the plurality of second target points on the target object and the trajectory slope.

For example, trajectory slope k of the target object may be determined according to the following formula (20):

$$k = \frac{V_{yabs}}{V_{xabs}} \qquad (20).$$

Wherein $V_{yabs}$ represents an absolute velocity of the target object in a Y-axis direction, and $V_{xabs}$ represents an absolute velocity of the target object in an X-axis direction.

Further, a predicted driving trajectory of the second target point p1 may be determined according to the following formula (21), and a predicted driving trajectory of the second target point p2 may be determined according to the following formula (22):

$$(y - y_{p1}) = k * (x - x_{p1}) \qquad (21);$$

and

$$(y - y_{p2}) = k * (x - x_{p2}) \qquad (22).$$

Wherein $(x_{p1}, y_{p1})$ represents a coordinate of the second target point p1, $(x_{p2}, y_{p2})$ represents a coordinate of the second target point p2, and (x, y) represents a coordinate of a point in the predicted driving trajectory.

Step S23c. Determining the second predicted driving trajectory based on the predicted driving trajectories of respective second target points.

For example, the second predicted driving trajectory of the target vehicle 32 includes at least the predicted driving trajectory of the second target point p1 and the predicted driving trajectory of the second target point p2.

According to the method for determining a time to collision provided in this embodiment of this disclosure, a plurality of predicted driving trajectories of the target object are determined based on the trajectory slope of the target object and the plurality of second target points on the target object. In this way, the predicted driving trajectory of the target object can be finely determined, thereby accurately obtaining the trajectory intersection to lay a good foundation for solving the TTC in the future.

In some embodiments, determining the second predicted driving trajectory based on the predicted driving trajectory of each second target point includes: determining a historical trajectory of the target object; and determining the second predicted driving trajectory based on the historical trajectory of the target object and the predicted driving trajectory of each second target point.

For example, the detection data of the target object is obtained through perception. For example, the velocity, the size, and the like of the target vehicle are all determined through perception. Due to instability and jumping of perception, directing using real-time perception data to predict the trajectory of the target object may inevitably lead to problems such as oscillation and jumping to the predicted trajectory. Therefore, in the embodiments of this disclosure, trajectory slope corresponding to the historical trajectory of the target object is also calculated, providing historical information for correction of a predicted driving trajectory of a downstream target object. For example, n historical trajectory points may be recorded, average trajectory slope may be calculated, and n-1 slope with relatively large deviations may be filtered out. Finally, position information of the target object in a next frame is predicted based on filtering slope and a time interval, so as to correct the second predicted driving trajectory to reduce impact of perceptual instability on calculation of the TTC.

In some examples, jumping of the second predicted driving trajectory caused by a current perception error may be corrected by designing a reasonable weight equation based on the second predicted driving trajectory in a current state, the trajectory slope corresponding to the historical trajectory of the target object, and the predicted position information of the target object in the next frame, so as to reduce impact of perceptual jumping.

In some embodiments, determining the second predicted driving trajectory based on the historical trajectory of the target object and the predicted driving trajectory of respective second target points includes: determining a predicted position and historical trajectory slope of the target object based on the historical trajectory of the target object; determining predicted trajectory slope of the predicted driving trajectories of respective second target points based on the position data of the detection data and the predicted driving trajectories of respective second target points; correcting the predicted driving trajectories of respective second target points based on a difference between predicted trajectory slope and the historical trajectory slope and a difference between the position data and the predicted position; and determining the second predicted driving trajectory based on the corrected predicted driving trajectories of respective second target points.

For example, the current position data is subtracted from the predicted position to obtain a position difference $E_x$ of a horizontal coordinate and a position difference $E_y$ of a vertical coordinate. A predicted trajectory slope is subtracted from the historical trajectory slope to obtain a slope difference $E_k$. Further, weight of correction is determined based on the difference: weight $w_x$ of an X-axis coordinate of the trajectory point may be determined according to the following formula (23), weight $w_y$ of a Y-axis coordinate of the trajectory point may be determined according to the following formula (24), and weight $w_k$ of the slope may be determined according to the following formula (25):

$$w_x = \frac{E_x}{\widetilde{E_x}} \ (\widetilde{E_x} = 1.1, \text{ being a quantifiable quantity}) \quad (23);$$

$$w_y = \frac{E_y}{\widetilde{E_y}} \ (\widetilde{E_y} = 0.6, \text{ being a quantifiable quantity}) \quad (24);$$

and

$$w_k = \frac{E_k}{\widetilde{E_k}} \ (\widetilde{E_k} = 0.2, \text{ being a quantifiable quantity}) \quad (25).$$

Therefore, the predicted driving trajectory (that is, the formula (21)) of the second target point p1 may be corrected according to the following formula (26), and the predicted driving trajectory (that is, the formula (22)) of the second target point p2 may be corrected according to the following formula (27):

$$\left(y - y_{p1} * w_y + y_{p1pre} * (1 - w_y)\right) =$$

$$(k * w_k + \tilde{k} * (1 - w_k)) * (x - (x_{p1} * w_x + x_{p1pre} * (1 - w_x))) \quad (26);$$

and

$$\left(y - y_{p2} * w_y + y_{p2pre} * (1 - w_y)\right) =$$

$$(k * w_k + \tilde{k} * (1 - w_k)) * (x - (x_{p2} * w_x + x_{p2pre} * (1 - w_x))) \quad (27).$$

Wherein $(x_{p1}, y_{p1})$ represents a coordinate of the second target point p1, $(x_{p2}, y_{p2})$ represents a coordinate of the second target point p2, (x, y) represents a coordinate of a point in the corrected predicted driving trajectory, $(x_{p1pre}, x_{p1pre})$ represents a predicted position of the point p1, $(X_{p2pre}, X_{p2pre})$ represents a predicted position of the point p2, k represents the historical trajectory slope, and $\tilde{k}$ represents the predicted trajectory slope.

Certainly, an intercept C1 of the corrected predicted driving trajectory of the second target point p1 and an intercept C2 of the corrected predicted driving trajectory of the second target point p2 may be determined according to the following formulas (28) and (29), respectively. Thus, the collision condition between the ego vehicle and the target object may be determined based on C1, C2, the turning radius of the ego vehicle, and the relative motion directions of the ego vehicle and the target object.

$$C1 = y_{p2} * w_y + y_{p2pre} * (1 - w_y)) + (k * w_k + \tilde{k} * (1 - w_k)) * (- (x_{p2} * w_x + x_{p2pre} * (1 - w_x)))$$

$$(28);$$

$$C2 = y_{p1} * w_y + y_{p1pre} * (1 - w_y)) + (k * w_k + \tilde{k} * (1 - w_k)) * (-(x_{p1} * w_x + x_{p1pre} * (1 - w_x)))$$

$$(29).$$

In some embodiments, the determining a predicted position and historical trajectory slope of the target object based on the historical trajectory of the target object includes: determining, based on a plurality of historical trajectory points in the historical trajectory, trajectory point slope corresponding to any two trajectory points in the plurality of historical trajectory points; determining average slope corresponding to the historical trajectory based on a plurality of trajectory point slope; determining the historical trajectory slope of the target object based on the plurality of trajectory point slope and the average slope; and determining the predicted position of the target object based on the historical trajectory slope, the second driving data of the detection data, the position data of the detection data, and time interval between adjacent trajectory points in the historical trajectory.

For example, after the target object is detected, whether a quantity n of frames in which the current target object appears is greater than a fourth preset value m (such as 6 frames) is first determined. If the quantity n is less than or equal to the fourth preset value, n frames of data of the target object is stored. If the quantity n is greater than the fourth preset value, latest m frames of data of the target object is stored, while other data is discarded. The stored data includes a historical position of the target object. Storage of the position is used as an example. For example, circular storage may be used, where data stored in a first storage space is $(x_1, y_1)$ and data stored in an $m^{th}$ storage space is $(x_m, y_m)$. When a latest historical trajectory occurs, $(x_1, y_1)$ is directly assigned to a latest coordinate of the historical trajectory point, and $(x_2, y_2)$ is directly assigned to the latest coordinate of the historical trajectory point in a next frame. The others may be obtained by analogy, with only coordinates of the historical trajectory point of the target object in latest m frames are remained.

Further, slope corresponding to positions of every two historical trajectory points in the stored data of the target object is determined. The slope $k_{uv}$ may be determined according to the following formula (30). As shown in formula (30), a difference quotient is calculated for horizontal and vertical coordinates of every two historical trajectory points to obtain $C_s^2$ slope values, where s represents a quantity of frames corresponding to the stored data of the target object, and is less than or equal to m.

$$k_{uv} = \frac{(- y_v)}{(x_u - x_v)} \quad (u > v > 0, \text{ u, where } v = 1, 2, ..., \text{ or } s) \quad (30).$$

Wherein $(x_u, y_u)$ represents a coordinate of the historical trajectory point in a $u^{th}$ frame in the stored data of the target object, and $(x_v, y_v)$ represents a coordinate of the historical trajectory point in a $v^{th}$ frame in the stored data of the target object.

Further, average slope $\tilde{k}$ corresponding to $C_s^2$ slope $k_{uv}$ is determined according to the following formula (31):

$$\tilde{k} = \frac{\sum_{\substack{1 \le u < s \\ 1 < v \le s}} (k_{uv})}{C_s^2} \quad (31).$$

Further, a difference $e_{uv}$ between each slope $k_{uv}$ and the average slope $\tilde{k}$ is determined according to the following formula (32):

$$e_{uv} = k_{uv} - \tilde{k} \qquad (32).$$

Finally, $k_{uv}$ corresponding to s-1 maximum $e_{uv}$ is removed, and average slope $\tilde{k}'$ is calculated by using remaining $C_s^2 - (s-1)$ $k_{uv}$ $k_{uv}$ to obtain the average slope $\tilde{k}$ after a maximum deviation is filtered out. The average slope $\tilde{k}'$ is used to determine a predicted position ($x_{objp}$, $y_{objp}$) of a point p in the target object according to the following formulas (33) and (34):

$$x_{objp} = v_e * \tilde{k}' * t_{pre} + x_e \qquad (33);$$

and

$$y_{objp} = \frac{v_e}{\tilde{k}'} * t_{pre} + y_e \qquad (34).$$

The point p represents any point in the predicted driving trajectory of the target object, ($x_e$, $y_e$) represents a coordinate of a latest recorded historical trajectory point, $v_e$ represents a velocity of the latest recorded target object, and $t_{pre}$ represents a frame interval.

Certainly, the point p may be the point p1 and/or the point p2 on the target object, and predicted positions of the point p1 and the point p2 may be obtained with reference to the foregoing calculation method.

In some embodiments, a plurality of trajectory intersections may be obtained by solving the equations (18), (19), (26), and (27) simultaneously. Formula (18) is an equation for an outer side of the lane in the first predicted driving trajectory of the ego vehicle, formula (19) is an equation for an inner side of the lane in the first predicted driving trajectory of the ego vehicle, formula (21) is an equation for an inner side of the lane in the second predicted driving trajectory of the target object, and formula (22) is an equation for an outer side of the lane in the second predicted driving trajectory of the target object.

Description is made by using the point Q3 in FIG. 3 as an example. The formulas (19) and (27) may be first solved simultaneously to obtain a coordinate of an intersection, which may be obtained through $\Delta$ in the following formula (35):

$$\Delta = \sqrt{B^2 - 4 * A * D} \qquad (35).$$

It is satisfied that A = (1 + K1$^2$), B = 2 $_*$ (K1 $_*$ C1 - K1 $_*$ R), D = (R - C1)$^2$ - R2$^2$), and K1 =(k $_*$ $w_k$ + $\tilde{k}_*$ (1 - $w_k$)).

If it is satisfied that $\Delta<0$, it indicates that the formula has no solution, that is, there is no intersection. If it is satisfied that $\Delta = 0$, a horizontal coordinate of the intersection is x = (-B/2A), and a vertical coordinate is y = k1 $_*$ x + C1. If it is satisfied that $\Delta>0$, two sets of coordinate values may be obtained, where one set is $x_1 = \frac{-B-\Delta}{2A}$ and $y_1 = k1 * \frac{-B-\Delta}{2A} + C1$, and the other set is $x_2 = \frac{-B+\Delta}{2A}$ and $y_2 = k1 * \frac{-B+\Delta}{2A} + C1$.

Further, in the coordinate system of the ego vehicle, an invalid intersection may be filtered out, and the filtered intersection is the intersection Q3. Filtering conditions include:

    1) not calculating the intersection if both horizontal and vertical coordinates of the intersection are greater than a turning radius of the ego vehicle;
    2) an angle $\alpha$ corresponding to a valid intersection is within 0- $\pi/2$;
    3) a value of the intersection at the X coordinate is greater than 0; and
    4) removing a nearest point of x. To be specific, if the predicted driving trajectory of the target vehicle has two intersections with a 1/4 circle of the predicted driving trajectory of the ego vehicle, and the two intersections meet the foregoing three conditions, an intersection with a smallest x-coordinate value is removed.

The angle $\alpha$ corresponding to the intersection is $\alpha_1$ or $\alpha_2$, which may be determined according to the following formula (36) or (37):

$$\alpha_1 = \tan^{-1} \frac{x_1}{y_1 - R} \qquad (36);$$

and

$$\alpha_2 = \tan^{-1}\frac{x_2}{y_2 - R} \qquad (37).$$

Similarly, coordinates of other three intersections $Q_1$, $Q_2$ and $Q_4$ may be obtained.

Exemplary apparatus

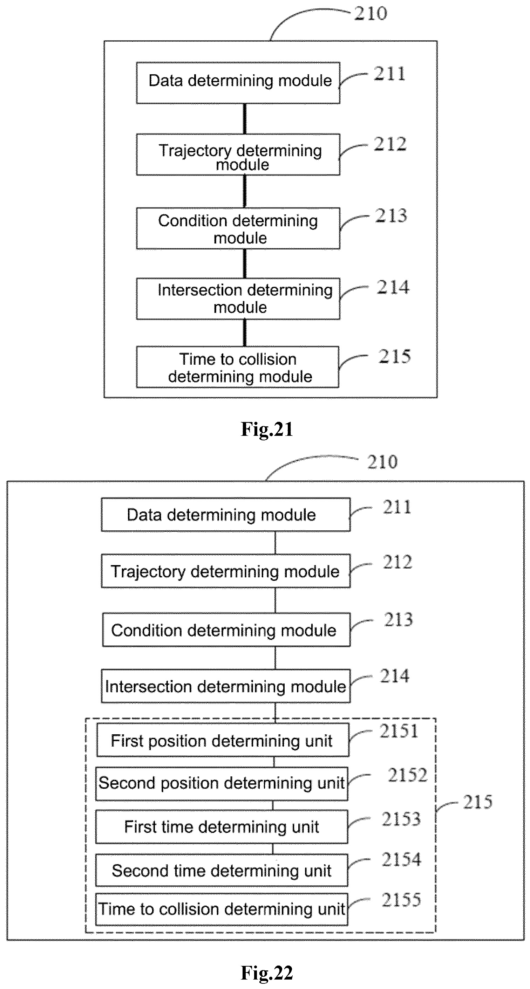

FIG. 21 shows an apparatus 210 for determining time to collision according to an embodiment of this disclosure. As shown in FIG. 21, the determining apparatus 210 includes a data determining module 211, a trajectory determining module 212, a condition determining module 213, an intersection determining module 214, and a time to collision determining module 215.

The data determining module 211 is configured to determine vehicle data of an ego vehicle and detection data of a target object.

The trajectory determining module 212 is configured to determine a first predicted driving trajectory of the ego vehicle and a second predicted driving trajectory of the target object based on the ego vehicle data and the detection data, respectively.

The condition determining module 213 is configured to determine a collision condition between the ego vehicle and the target object based on first driving data of the ego vehicle data, second driving data of the detection data, and the second predicted driving trajectory.

The intersection determining module 214 is configured to determine a plurality of trajectory intersections based on the first predicted driving trajectory and the second predicted driving trajectory.

The time to collision determining module 215 is configured to determine a time to collision between the ego vehicle and the target object based on the ego vehicle data, the detection data, the collision condition, and the plurality of trajectory intersections.

In some embodiments, the condition determining module 213 is specifically configured to determine a relative motion direction between the ego vehicle and the target object based on the first driving data of the ego vehicle data and the second driving data of the detection data; determine a turning radius of the ego vehicle based on the first driving data; determine a intercept of the second predicted driving trajectory in a coordinate system of the ego vehicle; and determine the collision condition between the ego vehicle and the target object based on the intercept, the turning radius of the ego vehicle, and the relative motion direction between the ego vehicle and the target object.

In some embodiments, as shown in FIG. 22, the time to collision determining module 215 includes a first position determining unit 2151, a second position determining unit 2152, a first time determining unit 2153, a second time determining unit 2154, and a time to collision determining unit 2155.

The first position determining unit 2151 is configured to determine positions of a plurality of first target points on the ego vehicle based on first size data of the ego vehicle data.

The second position determining unit 2152 is configured to determine positions of a plurality of second target points on the target object based on second size data and position data of the detection data.

The first time determining unit 2153 is configured to predict, based on the first driving data and the positions of the plurality of first target points on the ego vehicle, first times at which respective first target points pass through the plurality of trajectory intersections.

The second time determining unit 2154 is configured to predict, based on the second driving data and the positions of the plurality of second target points on the target object, second times at which respective second target points pass through the plurality of trajectory intersections.

The time to collision determining unit 2155 is configured to determine the time to collision between the ego vehicle and the target object based on the first times, the second times, and the collision condition.

In some embodiments, the time to collision determining unit 2155 is configured to determine whether there is a risk of collision between the ego vehicle and the target object based on the first times and the second times; and determine, based on the first times, the second times, and the collision condition, the time to collision between the ego vehicle and the target object in response to there is the risk of collision between the ego vehicle and the target object.

In some embodiments, the time to collision determining unit 2155 is specifically configured to sort a plurality of the first times based on values of the first times at which respective first target points pass through the trajectory intersections, and determine a first driving-in time and a first driving-away time of the ego vehicle among the plurality of first times based on a sorting result; sort a plurality of the second times based on values of the second time at which respective second target points pass through the trajectory intersections, and determine a second driving-in time and a second driving-away time of the target object among the plurality of second times based on a sorting result; determine whether there is a risk of collision between the ego vehicle and the target object based on the first driving-in time, the first driving-away time, the second driving-in time, and the second driving-away time; and determine, based on the first times, the second times, and the collision condition, the time to collision between the ego vehicle and the target object in response to there is the risk of collision between the ego vehicle and the target object.

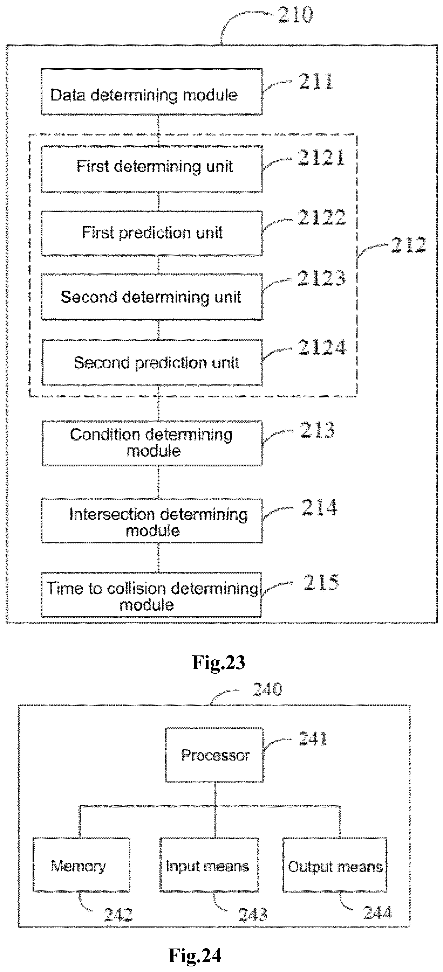

In some embodiments, as shown in FIG. 23, the trajectory determining module 212 includes a first determining unit 2121, a first prediction unit 2122, a second determining unit 2123, and a second prediction unit 2124.

The first determining unit 2121 is configured to determine a turning radius of the ego vehicle based on the first driving data of the ego vehicle data.

The first prediction unit 2122 is configured to determine the first predicted driving trajectory based on the turning radius of the ego vehicle and the first size data of the ego vehicle data.

The second determining unit 2123 is configured to determine trajectory slope of the target object based on the second driving data of the detection data.

The second prediction unit 2124 is configured to determine the second predicted driving trajectory based on the trajectory slope of the target object and the detection data.

In some embodiments, the first prediction unit 2122 is specifically configured to determine bend radii of the plurality of first target points on the ego vehicle based on the turning radius of the ego vehicle and the first size data;

determine a predicted driving trajectories for the first target points based on the bend radii of the plurality of first target points on the ego vehicle and the coordinate system of the ego vehicle; and determine the first predicted driving trajectory based on the predicted driving trajectories of respective first target points.

In some embodiments, the second prediction unit 2124 is configured to determine positions of a plurality of second target points on the target object based on the second size data and the position data of the detection data; determine predicted driving trajectories for the second target points based on the positions of the plurality of second target points on the target object and the trajectory slope; and determine the second predicted driving trajectory based on the predicted driving trajectories of respective second target points.

In some embodiments, the second prediction unit 2124 is configured to determine positions of a plurality of second target points on the target object based on the second size data and the position data of the detection data; determine a predicted driving trajectory for respective second target points based on the positions of the plurality of second target points on the target object and the trajectory slope; determine a historical trajectory of the target object; and determine the second predicted driving trajectory based on the historical trajectory of the target object and the predicted driving trajectories of respective second target points.

In some embodiments, the second prediction unit 2124 is specifically configured to determine positions of a plurality of second target points on the target object based on the second size data and the position data of the detection data; determine a predicted driving trajectories for the second target points based on the positions of the plurality of second target points on the target object and the trajectory slope; determine a historical trajectory of the target object; determine a predicted position and historical trajectory slope of the target object based on the historical trajectory of the target object; determine predicted trajectory slope of the predicted driving trajectories of respective second target points based on the position data of the detection data and the predicted driving trajectories of respective second target point; correct the predicted driving trajectories of the second target points based on a difference between each predicted trajectory slope and the historical trajectory slope and a difference between the position data and the predicted position; and determine the second predicted driving trajectory based on the corrected predicted driving trajectories of respective second target points.

In some embodiments, the second prediction unit 2124 is specifically configured to determine positions of a plurality of second target points on the target object based on the second size data and the position data of the detection data; determine predicted driving trajectories for respective second target points based on the positions of the plurality of second target points on the target object and the trajectory slope; determine a historical trajectory of the target object; determine, based on a plurality of historical trajectory points in the historical trajectory, trajectory point slope corresponding to any two trajectory points among the plurality of historical trajectory points; determine average slope corresponding to the historical trajectory based on the trajectory point slopes; determine the historical trajectory slope of the target object based on the trajectory point slopes and the average slope; determine the predicted position of the target object based on the historical trajectory slope, the second driving data of the detection data, the position data of the detection data, and time interval between adjacent trajectory points in the historical trajectory; determine predicted trajectory slope of the predicted driving trajectories of respective second target points based on the position data of the detection data and the predicted driving trajectories of respective second target points; correct the predicted driving trajectories of respective second target points based on a difference between the predicted trajectory slope and the historical trajectory slope and a difference between the position data and the predicted position; and determine the second predicted driving trajectory based on the corrected predicted driving trajectories of respective second target points.

For beneficial technical effects corresponding to the exemplary embodiments of the time to collision determining apparatus 210 for a vehicle that is described above, reference may be made to the corresponding beneficial technical effects in the section of exemplary method described above, and details are not described herein again.

Exemplary electronic device

FIG. 24 is a diagram of a structure of an electronic device 240 according to an embodiment of this disclosure. The electronic device 240 includes at least one processor 241 and a memory 242.

The processor 241 may be a central processing unit (CPU) or another form of processing unit having a data processing capability and/or an instruction execution capability, and may control other components in the electronic device 240 to implement desired functions.

The memory 242 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 241 may execute the one or more program instructions to implement the method for determining a time to collision according to the various embodiments of this disclosure that are described above and/or other desired functions.

In an example, the electronic device 240 may further include an input means 243 and an output means 244. These components are connected to each other through a bus system and/or another form of connection mechanism (not shown).

The input means 243 may further include, for example, a keyboard and a mouse.

The output means 244 may output various information to the outside, and may include, for example, a display, a speaker, a printer, a communication network, and a remote output device connected to the communication network.

Certainly, for simplicity, FIG. 24 shows only some of components in the electronic device 240 that are related to this disclosure, and components such as a bus and an input/output interface are omitted. In addition, according to specific application situations, the electronic device 240 may further include any other appropriate components.

Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the method for determining a time to collision according to the embodiments of this disclosure, that are described in the "Exemplary method" section described above.

The computer program product may include program code, written in one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are executed by the processor, the processor is enabled to perform the steps, of the method for determining a time to collision according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A method for determining time to collision, **characterized by** comprising:

determining (201) ego vehicle data of an ego vehicle and detection data of a target object;
determining (202), based on the ego vehicle data and the detection data, a first predicted driving trajectory of the ego vehicle and a second predicted driving trajectory of the target object, respectively;
determining (203) a collision condition between the ego vehicle and the target object based on first driving data of the ego vehicle data, second driving data of the detection data, and the second predicted driving trajectory;
determining (204) a plurality of trajectory intersections based on the first predicted driving trajectory and the second predicted driving trajectory; and
determining (205) the time to collision between the ego vehicle and the target object based on the ego vehicle data, the detection data, the collision condition, and the plurality of trajectory intersections.

2. The method according to claim 1, wherein the determining (203) a collision condition between the ego vehicle and the target object based on first driving data of the ego vehicle data, second driving data of the detection data, and the second predicted driving trajectory comprises:

determining (2031) a relative motion direction between the ego vehicle and the target object based on the first driving data of the ego vehicle data and the second driving data of the detection data;
determining (2032) a turning radius of the ego vehicle based on the first driving data;
determining (2033) an intercept of the second predicted driving trajectory in an ego vehicle coordinate system; and
determining (2034) the collision condition between the ego vehicle and the target object based on the intercept, the turning radius of the ego vehicle, and the relative motion direction between the ego vehicle and the target object.

3. The method according to claim 1, wherein the determining (205) the time to collision between the ego vehicle and the target object based on the ego vehicle data, the detection data, the collision condition, and the plurality of trajectory intersections comprises:

determining (2051) positions of a plurality of first target points on the ego vehicle based on first size data of the ego vehicle data;
determining (2052) positions of a plurality of second target points on the target object based on second size data and position data of the detection data;
predicting (2053), based on the first driving data and the positions of the plurality of first target points, first times at which respective first target points pass through the plurality of trajectory intersections;
predicting (2054), based on the second driving data and the positions of the plurality of second target points, a second times at which respective second target points pass through the plurality of trajectory intersections; and
determining (2055) the time to collision between the ego vehicle and the target object based on the first times, the second times, and the collision condition.

4. The method according to claim 3, wherein the determining (2055) the time to collision between the ego vehicle and the target object based on the first times, the second times, and the collision condition comprises:

determining (21a) whether there is a risk of collision between the ego vehicle and the target object based on the first times and the second times; and
determining (22a), based on the first times, the second times, and the collision condition, the time to collision between the ego vehicle and the target object in response to that there is the risk of collision between the ego vehicle and the target object.

5. The method according to claim 4, wherein the determining (21a) whether there is a risk of collision between the ego vehicle and the target object based on the first times and the second times comprises:

sorting a plurality of the first times based on values of the first times, and determining a first driving-in time and a first driving-away time for the ego vehicle among the plurality of first times based on a sorting result;

sorting a plurality of second times based on values of the second times, and determining a second driving-in time and a second driving-away time for the target object among the plurality of second times based on a sorting result; and

determining whether there is the risk of collision between the ego vehicle and the target object based on the first driving-in time, the first driving-away time, the second driving-in time, and the second driving-away time.

6. The method according to any one of claims 1 to 5, wherein the determining (202), based on the ego vehicle data and the detection data, a first predicted driving trajectory of the ego vehicle and a second predicted driving trajectory of the target object, respectively comprises:

Determining (2021) a turning radius of the ego vehicle based on the first driving data of the ego vehicle data; determining (2022) the first predicted driving trajectory based on the turning radius of the ego vehicle and the first size data of the ego vehicle data;

determining (2023) trajectory slope of the target object based on the second driving data of the detection data; and determining (2024) the second predicted driving trajectory based on the trajectory slope of the target object and the detection data.

7. The method according to claim 6, wherein the determining (2022) the first predicted driving trajectory based on the turning radius of the ego vehicle and the first size data of the ego vehicle data comprises:

determining (21b) turning radii of the plurality of first target points on the ego vehicle based on the turning radius of the ego vehicle and the first size data;

determining (22b) predicted driving trajectories for the plurality of the first target points based on the turning radii of the plurality of the first target points and the ego vehicle coordinate system; and

determining (23b) the first predicted driving trajectory based on the predicted driving trajectories of the first target points.

8. The method according to claim 6, wherein the determining (2024) the second predicted driving trajectory based on the trajectory slope of the target object and the detection data comprises:

determining (21c) positions of the plurality of second target points on the target object based on second size data and position data of the detection data;

determining (22b) predicted driving trajectories for the plurality of the second target points based on the positions of the plurality of the second target points and the trajectory slope; and

determining (23b) the second predicted driving trajectory based on the predicted driving trajectories of the second target points.

9. The method according to claim 8, wherein the determining (23b) the second predicted driving trajectory based on the predicted driving trajectories of the second target points comprises:

determining a historical trajectory of the target object; and

determining the second predicted driving trajectory based on the historical trajectory of the target object and the predicted driving trajectories of the second target points.

10. The method according to claim 9, wherein the determining the second predicted driving trajectory based on the historical trajectory of the target object and the predicted driving trajectories of the second target points comprises:

determining a predicted position and historical trajectory slope of the target object based on the historical trajectory of the target object;

determining predicted trajectory slopes of the predicted driving trajectories of the second target points based on the position data of the detection data and the predicted driving trajectories of the second target points;

performing correction on the predicted driving trajectories of the second target points based on a difference between the predicted trajectory slope and the historical trajectory slope and a difference between the position data and the predicted position; and

determining the second predicted driving trajectory based on the corrected predicted driving trajectories of the second target points.

11. The method according to claim 10, wherein the determining a predicted position and historical trajectory slope of the target object based on the historical trajectory of the target object comprises:

determining, based on a plurality of historical trajectory points in the historical trajectory, trajectory point slopes corresponding to any two trajectory points among the plurality of historical trajectory points;
determining average slope corresponding to the historical trajectory based on the trajectory point slopes;
determining the historical trajectory slope of the target object based on the trajectory point slopes and the average slope; and
determining the predicted position of the target object based on the historical trajectory slope, the second driving data of the detection data, the position data of the detection data, and time interval between adjacent trajectory points in the historical trajectory.

12. An apparatus (210) for determining time to collision, **characterized by** comprising:

a data determining module (211), configured to determine vehicle data of an ego vehicle and detection data of a target object;
a trajectory determining module (212), configured to determine a first predicted driving trajectory of the ego vehicle and a second predicted driving trajectory of the target object based on the ego vehicle data and the detection data, respectively;
a condition determining module (213), configured to determine a collision condition between the ego vehicle and the target object based on first driving data of the ego vehicle data, second driving data of the detection data, and the second predicted driving trajectory;
an intersection determining module (214), configured to determine a plurality of trajectory intersections based on the first predicted driving trajectory and the second predicted driving trajectory; and
a time to collision determining module (215), configured to determine a time to collision between the ego vehicle and the target object based on the ego vehicle data, the detection data, the collision condition, and the plurality of trajectory intersections.

13. The apparatus according to claim 12, wherein the trajectory determining module (212) comprises:

A first determining unit (2121), configured to determine a turning radius of the ego vehicle based on the first driving data of the ego vehicle data;
a first prediction unit (2122), configured to determine the first predicted driving trajectory based on the turning radius of the ego vehicle and the first size data of the ego vehicle data;
a second determining unit (2123), configured to determine trajectory slope of the target object based on the second driving data of the detection data; and
a second prediction unit (2124), configured to determine the second predicted driving trajectory based on the trajectory slope of the target object and the detection data.

14. A computer readable storage medium, wherein the storage medium stores a computer program, which is used for implementing the method for determining a time to collision according to any one of claims 1 to 11.

15. An electronic device (240), wherein the electronic device (240) comprises:

a processor (241); and
a memory (242), configured to store processor-executable instructions,
wherein the processor (241) is configured to read the executable instructions from the memory (242), and execute the instructions to implement the method for determining a time to collision according to any one of claims 1 to 11.

**Fig.1**

**Fig.2**

**Fig.3**

Working condition 1

**Fig.4A**

Working condition 2

**Fig.4B**

Working condition 3

**Fig.4C**

Working condition 4

**Fig.4D**

Working condition 5

**Fig.4E**

Working condition 6

**Fig.4F**

201

Determining ego vehicle data of an ego vehicle and
detection data of a target object

202

Determining, based on the ego vehicle data and the detection data,
a first predicted driving trajectory of the ego vehicle and
a second predicted driving trajectory of the target object, respectively

2031

Determining a relative motion direction between the ego vehicle and
the target object based on the first driving data of
the ego vehicle data and the second driving data of the detection data

2032

Determining a turning radius of the ego vehicle based on
the first driving data

2033

Determining an intercept of the second predicted driving
trajectory in a coordinate system of the ego vehicle

2034

Determining the collision condition between the ego vehicle and
the target object based on the intercept, the turning radius of
the ego vehicle, and the relative motion direction
between the ego vehicle and the target object

203

204

Determining a plurality of trajectory intersections based on
the first predicted driving trajectory and
the second predicted driving trajectory

205

Determining the time to collision between the ego vehicle and the target
object based on the ego vehicle data, the detection data,
the collision condition, and the plurality of trajectory intersections

**Fig.5**

Determining ego vehicle data of an ego vehicle and detection data
of a target object — 201

Determining, based on the ego vehicle data and the detection data,
a first predicted driving trajectory of the ego vehicle and
a second predicted driving trajectory of the target object, respectively — 202

Determining a collision condition between the ego vehicle and
the target object based on first driving data of the ego vehicle data,
second driving data of the detection data,
and the second predicted driving trajectory — 203

Determining a plurality of trajectory intersections based on
the first predicted driving trajectory and
the second predicted driving trajectory — 204

— 205

Determining positions of a plurality of first target points on
the ego vehicle based on
first size data of the ego vehicle data — 2051

Determining positions of a plurality of second target points on
the target object based on second size data and position data
of the detection data — 2052

Predicting, based on the first driving data and the positions of
the plurality of first target points on the ego vehicle,
first times at which respective first target points pass through
the plurality of trajectory intersections — 2053

Predicting, based on the second driving data and the positions of
the plurality of second target points on the target object,
second times at respective second target points pass through
the plurality of trajectory intersections — 2054

Determining the time to collision between the ego vehicle and
the target object based on the first times, the second times,
and the collision condition — 2055

**Fig.6**

Determining ego vehicle data of an ego vehicle and detection data of a target object — 201

Determining, based on the ego vehicle data and the detection data, a first predicted driving trajectory of the ego vehicle and a second predicted driving trajectory of the target object, respectively — 202

Determining a collision condition between the ego vehicle and the target object based on first driving data of the ego vehicle data, second driving data of the detection data, and the second predicted driving trajectory — 203

Determining a plurality of trajectory intersections based on the first predicted driving trajectory and the second predicted driving trajectory — 204

— 205

Determining positions of a plurality of first target points on the ego vehicle based on first size data of the ego vehicle data — 2051

Determining positions of a plurality of second target points on the target object based on second size data and position data of the detection data — 2052

Predicting, based on the first driving data and the positions of the plurality of first target points on the ego vehicle, first times at which respective first target points pass through the plurality of trajectory intersections — 2053

Predicting, based on the second driving data and the positions of the plurality of second target points on the target object, second times at respective second target points pass through the plurality of trajectory intersections — 2054

Determining whether there is a risk of collision between the ego vehicle and the target object based on the first times and the second times — 21a

Determining, based on the first times, the second times, and the collision condition, the time to collision between the ego vehicle and the target object in response to that there is the risk of collision between the ego vehicle and the target object — 22a

— 2055

**Fig.7**

**Fig.8A**

**Fig.8B**

**Fig.8C**

**Fig.8D**

**Fig.9A**                                                    **Fig.9B**

**Fig.9C**

**Fig.10A**                                                   **Fig.10B**

**Fig.10C**

**Fig.10D**

**Fig.11A**

**Fig.11B**

**Fig.11C**

Fig.12A

Fig.12B

Fig.12C

Fig.12D

Fig.13

**Fig.14**

**Fig.15**

**Fig.16**

Determining ego vehicle data of an ego vehicle and
detection data of a target object ⌐ 201

⌐ 202

Determining a turning radius of the ego vehicle based on
the first driving data of the ego vehicle data ⌐ 2021

Determining the first predicted driving trajectory based on
the turning radius of the ego vehicle and
the first size data of the ego vehicle data ⌐ 2022

Determining trajectory slope of the target object based on
the second driving data of the detection data ⌐ 2023

Determining the second predicted driving trajectory based on
the trajectory slope of the target object and
the detection data ⌐ 2024

⌐ 203

Determining a collision condition between the ego vehicle
and the target object based on first driving data of the ego
vehicle data, second driving data of the detection data,
and the second predicted driving trajectory

⌐ 204

Determining a plurality of trajectory intersections based on
the first predicted driving trajectory and
the second predicted driving trajectory

⌐ 205

Determining the time to collision between the ego vehicle
and the target object based on the ego vehicle data,
the detection data, the collision condition, and the plurality of
trajectory intersections

**Fig.17**

Determining ego vehicle data of an ego vehicle and detection data of a target object ⌐201

Determining a turning radius of the ego vehicle based on the first driving data of the ego vehicle data ⌐2021

Determining bend radii of the plurality of first target points on the ego vehicle based on the turning radius of the ego vehicle and the first size data ⌐21b

Determining a predicted driving trajectory for first target points based on the bend radii of the plurality of first target points on the ego vehicle and the coordinate system of the ego vehicle ⌐22b ⌐2022

Determining the first predicted driving trajectory based on the predicted driving trajectories of respective first target points ⌐23b

Determining trajectory slope of the target object based on the second driving data of the detection data ⌐2023

Determining the second predicted driving trajectory based on the trajectory slope of the target object and the detection data ⌐2024

⌐202

Determining a collision condition between the ego vehicle and the target object based on first driving data of the ego vehicle data, second driving data of the detection data, and the second predicted driving trajectory ⌐203

Determining a plurality of trajectory intersections based on the first predicted driving trajectory and the second predicted driving trajectory ⌐204

Determining the time to collision between the ego vehicle and the target object based on the ego vehicle data, the detection data, the collision condition, and the plurality of trajectory intersections ⌐205

**Fig.18**

**Fig.19**

Determining ego vehicle data of an ego vehicle and detection data of a target object — 201

— 202

Determining a turning radius of the ego vehicle based on the first driving data of the ego vehicle data — 2021

Determining the first predicted driving trajectory based on the turning radius of the ego vehicle and the first size data of the ego vehicle data — 2022

Determining trajectory slope of the target object based on the second driving data of the detection data — 2023

Determining positions of a plurality of second target points on the target object based on second size data and position data of the detection data — 21c

Determining predicted driving trajectories for respective second target points based on the positions of the plurality of second target points on the target object and the trajectory slope — 22c — 2024

Determining the second predicted driving trajectory based on the predicted driving trajectories of respective second target points — 23c

Determining a collision condition between the ego vehicle and the target object based on first driving data of the ego vehicle data, second driving data of the detection data, and the second predicted driving trajectory — 203

Determining a plurality of trajectory intersections based on the first predicted driving trajectory and the second predicted driving trajectory — 204

Determining the time to collision between the ego vehicle and the target object based on the ego vehicle data, the detection data, the collision condition, and the plurality of trajectory intersections — 205

**Fig.20**

210

Data determining module — 211

Trajectory determining module — 212

Condition determining module — 213

Intersection determining module — 214

Time to collision determining module — 215

**Fig.21**

210

Data determining module — 211

Trajectory determining module — 212

Condition determining module — 213

Intersection determining module — 214

First position determining unit — 2151

Second position determining unit — 2152

First time determining unit — 2153

Second time determining unit — 2154

Time to collision determining unit — 2155

215

**Fig.22**

210

211 Data determining module

212
- 2121 First determining unit
- 2122 First prediction unit
- 2123 Second determining unit
- 2124 Second prediction unit

213 Condition determining module

214 Intersection determining module

215 Time to collision determining module

**Fig.23**

240

241 Processor

242 Memory
243 Input means
244 Output means

**Fig.24**